# EUROPÄISCHE PATENTSCHRIFT

(11) **EP 0 881 031 B1**
(45) Veröffentlichungstag und Bekanntmachung des Hinweises auf die Patenterteilung: **11.09.2002**
(21) Anmeldenummer: 98109519.3
(22) Anmeldetag: 26.05.1998
(51) Int. Cl.: B23Q 3/157

(54) **Werkzeugmaschine, insbesondere ein CNC-gesteuertes Bearbeitungszentrum, mit einer automatischen Werkzeugwechseleinrichtung**
Machine tool, specially a CNC-Machining centre, provided with an automatic tool changer
Machine outil, en particulier une machine outil à commande numérique, pourvue d'un changeur automatique d'outil

(30) Priorität: 27.05.1997 DE 19722080
(43) Veröffentlichungstag der Anmeldung: 02.12.1998
(73) Patentinhaber: AXA-Entwicklungs- und Maschinenbaugesellschaft für Produktionstechnische Anlagen und Geräte mbH, 48624 Schöppingen (DE)
(72) Erfinder: Kappelhoff, Heinrich, Dipl.-Ing., 48624 Schöppingen (DE); Wolf, Gottfried, Dipl.-Ing., 48653 Coesfeld (DE)
(74) Vertreter: Schulze Horn & Partner

(56) Entgegenhaltungen:
- EP-A- 0 283 430
- DE-A- 4 107 446
- JP-A- 2 015 939
- JP-A- 2 015 940
- JP-A- 7 171 728

## Beschreibung

Die vorliegende Erfindung betrifft eine Werkzeugmaschine, insbesondere ein CNC-gesteuertes Bearbeitungszentrum, gemäß dem Oberbegriff des Anspruchs 1.

Bei modernen Werkzeugmaschinen, insbesondere CNC-gesteuerten Bearbeitungszentren, werden zur Erzielung einer hohen Wirtschaftlichkeit ihres Einsatzes automatisch arbeitende Werkzeugwechseleinrichtungen und Werkzeugmagazine zur Vorhaltung unterschiedlicher benötigter Werkzeuge eingesetzt. Die wesentliche generelle Anforderung an eine Werkzeugwechseleinrichtung und ein zugehöriges Werkzeugmagazin ist eine möglichst kurze Werkzeugwechselzeit, um unproduktive Totzeiten beim Einsatz der Werkzeugmaschine möglichst kurz zu halten. Entsprechend den unterschiedlichen Konstruktionen von Werkzeugmaschinen sind auch entsprechend viele Ausführungen von Werkzeugwechseleinrichtungen und Werkzeugmagazinen aus der Praxis bekannt, die je nach Maschinenart Vor- und Nachteile haben.

Unter anderem sind aus der Praxis Werkzeugmaschinen bekannt, bei denen die Werkzeugwechseleinrichtung und das Werkzeugmagazin ortsfest am Spindelstock plaziert sind und alle Bewegungen des Spindelstocks mitmachen. Aufgrund der geringen räumlichen Entfernung zwischen Werkzeugmagazin und Arbeitsspindel der Werkzeugmaschine sind hier zwar kurze Werkzeugwechselzeiten ohne weiteres erreichbar, jedoch führen die an dem Spindelstock angeordneten Teile, nämlich Werkzeugwechseleinrichtung, Werkzeugmagazin und die darin bevorrateten Werkzeuge, zu einer wesentlichen Erhöhung des Gewichts des Spindelstocks insgesamt, was eine entsprechend stabile Konstruktion und entsprechend starke Antriebsmittel für das Verfahren des Spindelstocks erforderlich macht. Dies führt zu einer Verteuerung der entsprechenden Teile der Werkzeugmaschine. Zudem ist der im Bereich des Spindelstocks für die Werkzeugwechseleinrichtung und insbesondere für das Werkzeugmagazin zur Verfügung stehende Raum begrenzt, so daß oft nicht die gewünschte große Anzahl von Werkzeugen im Magazin bevorratet werden kann. Außerdem führt das im Bereich des Spindelstocks angeordnete Werkzeugmagazin häufig zu einer Beeinträchtigung der Bewegungsfreiheit des Spindelstocks. Insbesondere ist eine derartige Konstruktion von Werkzeugwechseleinrichtung und Werkzeugmagazin nicht für Werkzeugmaschinen mit Schwenkspindel geeignet, bei denen die Arbeitsspindel nicht nur Bewegungen in den drei Raumkoordinaten x, y und z ausführt, sondern auch um mindestens eine Schwenkachse verschwenkbar ist. In einem solchen Falle würde das Werkzeugmagazin sehr schnell in den Bereich des zu bearbeitenden Werkstücks oder des Werkstücktisches gelangen, was während der Bearbeitung selbstverständlich nicht geschehen darf.

Weiterhin sind aus der Praxis Werkzeugmaschinen bekannt, die als Vertikalständermaschinen bezeichnet werden und bei denen der Spindelstock an dem genannten Vertikalständer in Vertikalrichtung (z-Richtung) verfahrbar ist. Bei derartigen bekannten Werkzeugmaschinen ist die Werkzeugwechseleinrichtung mit dem zugehörigen Werkzeugmagazin im Vertikalständer mittig hinter dem Spindelstock angeordnet. Auch hier ist prinzipiell eine kurze Werkzeugwechselzeit erreichbar, jedoch ist als nachteilig anzusehen, daß die manuelle Be- und Entstückung des Werkzeugmagazins von der Vorderseite und auch von der rechten oder linken Außenseite der Werkzeugmaschine aus unmöglich ist. Lediglich von der Maschinenrückseite aus ist diese manuelle Be- und Entstückung des Werkzeugmagazins möglich, was erhebliche Einschränkungen bei der Aufstellung der Werkzeugmaschine in den Räumlichkeiten des Benutzers mit sich bringt. Außerdem ist bei derartigen Werkzeugmaschinen als nachteilig zu erwähnen, daß der Vertikalständer einen Tunnel für die Aufnahme des Werkzeugmagazins und der Werkzeugwechseleinrichtung aufweisen muß. Ein derartiger Tunnel führt zu einem erheblichen mechanischen Stabilitätsverlust des Vertikalständers, der nur unzulänglich und mit kostspieligen konstruktiven Maßnahmen ausgeglichen werden kann.

Weiterhin ist aus der DE 32 30 051 A1 eine Werkzeugmaschine mit automatischer Werkzeugwechselvorrichtung bekannt. Diese Werkzeugmaschine besitzt eine vertikale Säule, an welcher ein Werkzeugsupport angebracht ist, der darin eine vertikal bewegliche Werkzeugstange aufnimmt. Die Werkzeugstange ist an ihrem untersten Ende mit einer Werkzeughalteraufnahmeeinrichtung zum Anbringen eines ein Schneidwerkzeug aufweisenden Werkzeughalters versehen. Die Werkzeugmaschine hat außerdem ein Werkzeughaltermagazin, welches eine Vielzahl von Werkzeughaltern enthält. Das Magazin dreht sich so um die vertikale Säule herum, daß einer der Werkzeughalter zu einer vorbestimmten Stellung ausgerichtet wird, in welcher Werkzeughalter an der Werkzeugstange angebracht oder von dieser in einer reziproken vertikalen Bewegung der Werkzeugstange gelöst werden. Auch bei dieser Werkzeugmaschine sind kurze Werkzeugwechselzeiten erreichbar, jedoch besteht auch hier der Nachteil, daß die beschriebene Anordnung des Werkzeugmagazins zu einer großen Baubreite und Bautiefe der Säule, entsprechend dem Vertikalständer, führt. Damit eignet sich auch diese Konstruktion insbesondere nicht für Werkzeugmaschinen mit Schwenkspindeln, da es dann zu Kollisionen zwischen dem Werkzeugmagazin oder den darin vorgehaltenen Werkzeugen einerseits und dem zu bearbeitenden Werkstück oder dem dieses halternden Werkstücktisch käme.

Aus der DE 41 07 446 A1 ist eine Werkzeugwechseleinrichtung für eine Werkzeugmaschine bekannt, die die im Oberbegriff des Anspruchs 1 aufgeführten Merkmale aufweist. Bei dieser Werkzeugwechseleinrichtung ist ein zumindest in der Wechselposition über die Tischebene hinausreichender und in gleicher Höhe mit der Arbeitsspindel und den Werkzeugaufnahmen des Werkzeugmagazins zusammenwirkender Greiferkopf an der dem Ständer abgewandten Tischseite unterhalb der Tischebene geführt. Weiterhin ist hier bevorzugt vorgesehen, daß der außerhalb der Arbeitsbereiche der Arbeitsspindel und des aktiv ausgebildeten Werkzeugmagazins geführte Greiferkopf in den zum Wechseln der Werkzeuge vorgesehenen X-Positionen in die Arbeitsbereiche bringbar ist, was vorzugsweise dadurch geschieht, daß der Greiferkopf um eine zur X-Achse oder zur Z-Achse parallele Achse schwenkbar ist. Als nachteilig wird bei dieser bekannten Werkzeugwechseleinrichtung angesehen, daß der Greiferkopf zur Führung an der dem Ständer abgewandten Tischseite unter der Tischebene einen relativ langen und dadurch platzraubenden Greiferarm benötigt. Dieser Greiferarm bewegt sich zumindest zeitweise in einem üblicherweise an Werkzeugmaschinen für den Aufenthalt des Bedienungspersonals vorgesehenen Bereich. Hierdurch sind besondere Schutzmaßnahmen, insbesondere ein größerer Abstand des Bedienungspersonals vom Werkstück und von der Maschine, nötig. Für die Erzielung einer'ausreichenden Stabilität des Greiferarms muß dieser ausreichend stark dimensioniert sein, was zu einem hohen Gewicht und damit zu der Erfordernis hoher Antriebskräfte und einer entsprechend stabilen Führung führt.

Aus der EP 0 283 430 A2 ist eine weitere Werkzeugmaschine mit einem Werkzeugwechsler, hier konkret eine Funkenerosionsmaschine mit Elektrodenwechsler, bekannt. Die Werkzeugwechseleinrichtung weist hier einen in y-Richtung gesteuert verfahrbaren Wechslerschlitten mit zwei Werkzeughaltern auf, wobei die Werkzeugwechseleinrichtung und das Werkzeugmagazin außerhalb des Arbeitsbereiches der Arbeitsspindel für eine Werkstückbearbeitung liegen. Dabei ist aus der Werkzeugwechsel-Grundposition heraus durch Verfahren des Wechslerschlittens in y-Richtung ein aus der Arbeitsspindel zu entnehmendes erstes Werkzeug in den ersten, zunächst unbelegten Werkzeughalter übergebbar und ein in die Arbeitsspindel einzusetzendes, aus dem Werkzeugmagazin herantransportiertes zweites Werkzeug aus dem zweiten Werkzeughalter an die Arbeitsspindel übergebbar. Für den Werkzeugwechsel gegebenenfalls erforderliche Hubbewegungen in z-Richtung zwischen Arbeitsspindel und Werkzeug sind durch Verfahren des Spindelstocks in der z-Richtung erzeugbar. Als nachteilig wird bei dieser Maschine angesehen, daß der Werkzeugwechsler neben einer linearen Bewegung zusätzlich Schwenkbewegungen ausführen muß, was den mechanischen Aufwand und den Aufwand für die Steuerung des Werkzeugwechslers erhöht. Da das Werkzeugmagazin sich in der Längsrichtung der Maschine hinter einem einen Teil der Maschine bildenden Fahrständer erstreckt, muß in diesem Fahrständer mindestens eine relativ große Öffnung freigehalten werden, durch die hindurch die Bewegungen des Werkzeugwechslers erfolgen. Eine solche Öffnung ist mechanisch ungünstig, da sie die Stabilität des Fahrständers beeinrächtigt, so daß durch entsprechende zusätzliche Stabilisierungsmaßnahmen die nötige Festigkeit des Fahrständers gewährleistet werden muß. Dies macht die Konstruktion des Fahrständers und damit der Maschine insgesamt aufwendiger und teurer.

Für die vorliegende Erfindung stellt sich deshalb die Aufgabe, eine Werkzeugmaschine der eingangs genannten Art zu schaffen, bei der kurze Werkzeugwechselzeiten erreichbar sind und bei der die Werkzeugwechseleinrichtung und das Werkzeugmagazin eine hohe Betriebssicherheit bei geringen Herstellungs- und Betriebskosten aufweisen sollen. Weiterhin sollen Beeinträchtigungen der Maschinenstabilität durch die Anordnung von Werkzeugwechseleinrichtung und Werkzeugmagazin nicht auftreten. Gleichzeitig sollen die Werkzeugwechseleinrichtung und das Werkzeugmagazin den Arbeitsraum der Arbeitsspindel bzw. der darin eingesetzten Werkzeuge nicht beschränken. Weiterhin soll das Werkzeugmagazin möglichst einfach manuell be- und entstückbar sein. Schließlich soll die Werkzeugmaschine mit gleicher Werkzeugwechseleinrichtung und gleichem Werkzeugmagazin sowohl mit vertikaler Arbeitsspindel als auch mit einer Schwenkspindel ausführbar sein, ohne daß große technische Änderungen erforderlich werden.

Die Lösung dieser Aufgabe gelingt erfindungsgemäß durch eine Werkzeugmaschine der eingangs genannten Art, die die kennzeichnenden Merkmale des Anspruchs 1 aufweist.

Die erfindungsgemäße Werkzeugmaschine bietet den Vorteil, daß das Werkzeugmagazin seitlich neben dem Spindelstock und damit außerhalb des Arbeitsbereiches der Spindel und der von dieser getragenen Werkzeuge angeordnet ist. Gleichzeitig wird aber dennoch eine kurze Werkzeugwechselzeit erreicht, weil der Wechslerschlitten nur eine lineare Bewegung in x-Richtung ausführen muß, die wenig Zeit beansprucht. Zudem besitzt der Wechslerschlitten zwei Werkzeughalter, so daß ein zeitaufwendiges Hinund Herfahren nicht nötig ist. Der erste Werkzeughalter dient dabei zur Aufnahme des aus der Spindel zu entnehmenden Werkzeuges und der zweite Werkzeughalter zur Zuführung des neu in die Spindel einzusetzenden Werkzeuges. Dadurch kann, während die Maschine mit dem gerade ges. Dadurch kann, während die Maschine mit dem gerade in der Spindel befindlichen Werkzeug noch einen Bearbeitungsvorgang ausführt, der Werkzeugwechsel vorteilhaft schon weitgehend vorbereitet werden, indem das neu in die Spindel einzusetzende Werkzeug schon aus dem Werkzeugmagazin in den zweiten Werkzeughalter des Wechslerschlittens eingesetzt wird und dann der Wechslerschlitten schon soweit wie möglich in x-Richtung bewegt wird, ohne daß er die für die Bearbeitung des Werkstücks erforderlichen Bewegungen der Spindel beeinträchtigt. Für den Werkzeugwechsel selbst muß dann lediglich noch die Spindel in ihre Werkzeugwechsel-Grundposition verfahren werden und der Wechslerschlitten den restlichen Bewegungsweg in x-Richtung zurücklegen.

Weiterhin wird vorteilhaft mit der erfindungsgemäßen Gestaltung der Führungen in den Werkzeughaltern eine sehr schnelle und einfache Übergabe von Werkzeugen einerseits zwischen Werkzeugmagazin und Werkzeughalter und andererseits zwischen Werkzeughalter und Spindel und jeweils umgekehrt ermöglicht. Bei einem Werkzeugwechsel kann, nachdem die Arbeitsspindel in ihre Werkzeugwechsel-Grundposition gefahren ist, der erste Werkzeughalter durch einfaches Verfahren des Wechslerschlittens in x-Richtung mit seiner in dieser Richtung offenen Seite der Führung in Eingriff mit dem gerade in der Spindel befindlichen Werkzeug gebracht werden. Nach Lösen und Ausheben des Werkzeuges aus der Spindel wird der Wechslerschlitten lediglich um ein kurzes Stück weiter in x-Richtung verfahren, bis das in dem zweiten Werkzeughalter befindliche zugeführte neue Werkzeug sich im Bereich der Spindel befindet. Nach dem Einheben des Werkzeuges und Arretieren in der Spindel kann dann die Spindel einfach in y-Richtung zusammen mit dem Werkzeug aus dem zweiten Werkzeughalter herausfahren. Sobald die Spindel mit dem Werkzeug ausreichend weit aus dem zweiten Werkzeughalter herausgefahren ist, kann der Wechslerschlitten schon in x-Richtung wieder zurückgefahren werden.

Vorteilhaft ist auch, daß beim Austausch von Werkzeugen zwischen dem Werkzeugmagazin und den Werkzeughaltern eine geradlinige Verschiebung der Werkzeuge in y-Richtung sowohl in der einen als auch in der anderen Richtung genügt. Der für die Übergabe von Werkzeugen zwischen dem Werkzeugmagazin und den Werkzeughaltern und umgekehrt vorgesehene, in y-Richtung bewegbare Schieber ist ein konstruktiv einfaches Bauteil, das mit geringem Aufwand herstellbar und betreibbar ist und eine hohe Betriebszuverlässigkeit gewährleistet.

Die Werkzeugmaschine gemäß Erfindung ermöglicht also trotz des auf den ersten Blick relativ großen Abstandes zwischen dem Werkzeugmagazin und der Spindel sehr kurze Werkzeugwechselzeiten.

Schließlich liegt ein Vorteil der erfindungsgemäßen Werkzeugmaschine darin, daß die manuelle Be- und Entstückung des Werkzeugmagazins problemlos von der Vorderseite oder von der linken oder rechten Seite der Werkzeugmaschine und des Werkzeugmagazins aus erfolgen kann. Die Rückseite der Werkzeugmaschine muß deshalb im laufenden Betrieb nicht zugänglich sein, so daß auch eine Aufstellung unmittelbar vor einer Gebäudewand oder Rücken an Rücken mit einer anderen Maschine ohne weiteres möglich ist. Damit werden bei der erfindungsgemäßen Werkzeugmaschine sowohl eine hohe Produktivität mit geringen Totzeiten als auch eine platzsparende Bauweise und Aufstellungsmöglichkeit geboten.

Die Koordinaten-Richtungen sind, wie bei Werkzeugmaschinen üblich, wie folgt definiert:
Die x-Richtung verläuft horizontal in Längsrichtung der Werkzeugmaschine, wobei die positive Richtung nach rechts weist, die y-Richtung verläuft horizontal quer zur x-Richtung, wobei die positive Richtung nach hinten weist, und die z-Richtung ist die Vertikalrichtung, wobei die positive Richtung nach oben weist.

Eine weitere Ausführung der Werkzeugmaschine gemäß Erfindung sieht vor, daß das Werkzeugmagazin und die Werkzeugwechseleinrichtung in der x-Richtung mit dem Spindelstock gekoppelt und zusammen mit diesem verfahrbar und in y- und z-Richtung von dem Spindelstock entkoppelt und unverfahrbar sind, wobei das Werkzeugmagazin in x-Richtung neben dem Spindelstock angeordnet ist. Bei dieser Ausführung der Werkzeugmaschine wird dafür gesorgt, daß der Spindelstock und das Werkzeugmagazin mit der Werkzeugwechseleinrichtung stets in einem festen Abstand in x-Richtung zueinander verbleiben. Dadurch wird die Steuerung der Werkzeugwechseleinrichtung wesentlich vereinfacht und auch beschleunigt, da die Zurücklegung unnötig langer Wege in x-Richtung vermieden wird. Gleichzeitig bleibt der Vorteil erhalten, daß das Werkzeugmagazin neben dem Spindelstock angeordnet ist und so dessen Bewegungsfreiheit nicht beeinträchtigt. Damit ist die Werkzeugmaschine auch ohne weiteres mit einer Schwenkspindel ausführbar, ohne daß dafür eine Änderung hinsichtlich des Werkzeugmagazins und der zugehörigen Werkzeugwechseleinrichtung erforderlich wäre. Da der Spindelstock und das Werkzeugmagazin in y- und z-Richtung entkoppelt sind, müssen die entsprechenden Antriebe für den Spindelstock auch nicht besonders stark ausgeführt werden, da in diesen beiden Richtungen nur relativ geringe Massen beschleunigt und gebremst werden müssen. Lediglich in der x-Richtung muß der Antrieb so ausgelegt sein, daß er auch das Werkzeugmagazin mit den darin vorgehaltenen Werkzeugen und die Werkzeugwechseleinrichtung ausreichend schnell beschleunigen und abbremsen kann.

Eine besonders platzsparende Bauweise der Werkzeugwechseleinrichtung wird dadurch erreicht, daß der Wechsler-Schlitten einen flachen, in x-Richtung zum Spindelstock schlitten einen flachen in x-Richtung zum Spindelstock weisenden Wechslerarm umfaßt, der die Werkzeughalter trägt und der in y-Richtung gesehen sich bei einem Werkzeugwechsel hinter der Arbeitsspindel befindet. Diese Bauweise bietet insbesondere den Vorteil, daß die Teile der Werkzeugwechseleinrichtung auch beim Werkzeugwechsel nicht in den Arbeitsbereich der Spindel hineinragen, so daß eine Einschränkung des Bewegungsbereiches der Spindel im Arbeitsraum nicht auftritt. Gleichzeitig ist damit auch der Vorteil verbunden, daß beim Zuführen eines zu bearbeitenden Werkstücks und beim Abführen des bearbeiteten Werkstücks eine einfache Handhabung aufgrund der guten Zugänglichkeit des Werkstücktisches gegeben ist.

Für einen schnellen Werkzeugwechsel ist es vorteilhaft, das Verfahren des Wechslerschlittens in x-Richtung mit möglichst hoher Geschwindigkeit durchzuführen. Um diese hohe Geschwindigkeit zu erreichen, sind auch hohe Beschleunigungen erforderlich. Um auch bei hohen Beschleunigungen sicher zu gewährleisten, daß das in dem in x-Richtung einseitig offenen Werkzeughalter gehalterte Werkzeug dieser Bewegung folgen kann, ohne daß sich sein Sitz im Werkzeughalter lockert oder es gar aus dem Werkzeughalter herausfällt, wird vorgeschlagen, daß der Werkzeughalter eine Arretierhebelanordnung umfaßt, mit der ein in den Werkzeughalter aufgenommenes Werkzeug in x-Richtung festlegbar ist, wobei die Arretieranordnung durch das in x-Richtung erfolgende Anfahren des aus der Spindel zu übernehmenden Werkzeuges aus ihrer Offen-Stellung in eine Arretierstellung überführbar ist und wobei bei oder nach der Übergabe des Werkzeuges an das Werkzeugmagazin die Arretierhebelanordnung wieder in ihre Offen-Stellung bringbar ist. Mit der Arretierhebelanordnung wird eine sichere Halterung des Werkzeuges bewirkt, wobei gleichzeitig aber aufwendige Betätigungsmittel für die Arretierhebelanordnung nicht benötigt werden. Die Konstruktion kann so relativ einfach und platzsparend ausgeführt werden und es stellt sich nicht das Problem, aktive Bauelemente innerhalb des Werkzeughalters unterbringen zu müssen.

Wenn ein neuer Werkzeugwechsel erfolgen soll, muß zuvor die Arretierhebelanordnung des Werkzeughalters, der das aus der Spindel zu entnehmende Werkzeug aufnehmen soll, in Offen-Stellung gebracht werden, damit der Werkzeughalter in Eingriff mit dem Werkzeug bringbar ist, ohne daß dieser Vorgang durch die Arretierhebelanordnung behindert oder verhindert wird. Um die Überführung der Arretierhebelanordnung in ihre Offen-Stellung möglichst einfach und zuverlässig zu bewirken, ist vorgesehen, daß der Schieber bei seiner Bewegung in y-Richtung während oder nach der Übergabe des Werkzeuges aus dem Werkzeughalter in das Werkzeugmagazin in Wirkeingriff mit einem am Werkzeughalter vorgesehenen Betätigungselement tritt, durch welches bei seiner Betätigung durch den Schieber eine Überführung der Arretierhebelanordnung aus der Arretierstellung in ihre Offen-Stellung bewirkbar ist.

Bevorzugt ist der Schieber durch einen Kurbeltrieb mittels eines Getriebebremsmotors antreibbar, da eine solche Ausführung des Antriebes eine einfache Konstruktion darstellt und eine verschleißarme und sichere Betriebsweise gewährleistet.

Da der Wechslerschlitten bei jedem Werkzeugwechsel an mehreren unterschiedlichen Positionen anhalten und aus diesen dann in derselben oder in umgekehrter Bewegungsrichtung weiterbewegt werden muß, ist zur Sicherstellung einer ausreichenden Genauigkeit vorgesehen, daß für das Verfahren des Wechslerschlittens in der x-Richtung ein NC-Antrieb verwendet wird. Die jeweilige Position und die Bewegungsrichtung des Wechslerschlittens können somit ständig von der NC-Steuerung überwacht und bei Bedarf korrigiert werden, wodurch die erforderliche Genauigkeit gewährleistet ist.

Bevorzugte konkrete Ausführungen des NC-Antriebes für das Verfahren des Wechslerschlittens in der x-Richtung sind in den Ansprüchen 8 bis 10 aufgeführt.

Für Werkzeugmaschinen, bei denen für den Werkzeugwechsel eine Aushub- und Einhubbewegung zwischen Spindel und Werkzeug erforderlich ist, ist bevorzugt vorgesehen, daß der Wechslerarm in der x-z-Ebene bewegbar mit dem übrigen Wechslerschlitten verbunden ist und daß der Wechslerarm relativ zum übrigen Wechslerschlitten bei dessen Verfahren in x-Richtung zusätzlich so bewegbar ist, daß die Werkzeughalter beim Werkzeugwechsel bei unbewegter Arbeitsspindel relativ zu dieser die für den Werkzeugwechsel erforderlichen Hubbewegungen in z-Richtung ausführen. Hiermit wird erreicht, daß bei einem Werkzeugwechsel die Arbeitsspindel keinerlei Bewegungen ausführen muß, wenn sie einmal ihre Werkzeugwechsel-Grundposition eingenommen hat. Hierdurch wird weitere Zeit bei einem Werkzeugwechsel eingespart, weil zwischen der NC-Steuerung für den Spindelkopf und der NC-Steuerung für das Verfahren des Wechslerarms keine Kommunikation mit entsprechendem Zeitbedarf erforderlich ist.

Um die zuvor erwähnte zusätzliche Bewegung der Werkzeughalter in z-Richtung möglichst einfach und gleichzeitig zuverlässig erzeugen zu können, ist vorgesehen, daß der Wechslerarm um eine in y-Richtung weisende Achse verschwenkbar unmittelbar oder mittelbar mittels eines Hilfsschlittens am übrigen Wechslerschlitten gehaltert ist und daß er über mindestens je eine Steuerkurve und Kurvenrolle relativ zum übrigen Wechslerschlitten bei dessen Verfahren in x-Richtung in der x-z-Ebene zwangsgesteuert bewegt wird. Vorteilhaft wird hiermit ein zusätzlicher Antrieb für den Wechslerarm nicht benötigt; vielmehr wird dessen Bewegung in z-Richtung zwangsgesteuert durch den Antrieb zum Verschieben des Wechslerschlittens in x-Richtung mitbewirkt. Neben einer einfachen technischen Konstruktion wird hier auch ein schneller Bewegungsablauf und damit ein schneller Werkzeugwechsel erreicht, weil eine Koordination zwischen verschiedenen Antrieben für die x- und die z-Richtung nicht nötig ist.

Da die zusätzliche Bewegung in der z-Richtung für die Werkzeughalter nur bei Bewegung des Wechslerschlittens in der einen Richtung erforderlich ist, ist bevorzugt vorgesehen, daß die Steuerkurve ein vorbelastetes Sperrstück enthält, das ein Durchlaufen der Steuerkurve durch die Kurvenrolle nur in einer Richtung gestattet. Auf diese Weise wird eine unnötige mechanische Belastung des Wechslerarms und der darin transportierten Werkzeuge vermieden; außerdem kann die rein geradlinige Bewegung ohne Durchlaufen der Steuerkurve mit höherer Geschwindigkeit ausgeführt werden, so daß hier eine weitere Zeiteinsparung ermöglicht wird.

Das Werkzeugmagazin umfaßt bevorzugt eine aus mehreren Werkzeugwagen gebildete Magazinkette, die in der x-y-Ebene NC-gesteuert verfahrbar ist und die bevorzugt einen oval- oder kreisförmigen Verlauf hat. Ein solches Werkzeugmagazin kann modular aufgebaut werden und so auf einfache Weise dem Bedarf an Werkzeugplätzen angepaßt werden. Dabei kann das Werkzeugmagazin bei der erfindungsgemäßen Werkzeugmaschine relativ groß sein, weil es außerhalb des Arbeitsbereiches der Arbeitsspindel liegt und deshalb in dieser Hinsicht keine Beschränkungen vorliegen.

Um das Bedienungspersonal der Werkzeugmaschine gegen Unfallgefahren zu sichern und um die im Werkzeugmagazin vorgehaltenen Werkzeuge gegen Späne oder sonstige aus der Umgebung kommende schädliche Einflüsse zu schützen, ist bevorzugt vorgesehen, daß das Werkzeugmagazin in einem mit Ausnahme des Bewegungsweges des Schiebers geschlossenen Gehäuse untergebracht ist, das an seiner Vorderfläche und/oder an seiner dem Spindelstock abgewandten Seitenfläche eine freigebbare Zugangsöffnung für eine manuelle Be- und Entstückung des Werkzeugmagazins aufweist. Bei geschlossenem Gehäuse wird so eine optimale Schutzfunktion erreicht, während bei Bedarf bei stillstehender Werkzeugmaschine ein problemloses Be- und Entstücken des Werkzeugmagazins durch das Bedienungspersonal möglich ist.

Im folgenden werden Ausführungsbeispiele der erfindungsgemäßen Werkzeugmaschine anhand einer Zeichnung näher erläutert. Die Figuren der Zeichnung zeigen im einzelnen:
- Figur 1: eine Werkzeugmaschine in Frontalansicht, teils im Längsschnitt, während der Bearbeitung eines Werkstücks,
- Figur 2: die Maschine aus Figur 1 in Draufsicht, teils im Horizontalschnitt, entsprechend der Blickrichtung II in Figur 1,
- Figur 3: die Maschine in einer Teil-Frontalansicht während einer ersten Phase eines Werkzeugwechsels,
- Figur 4: die Maschine in gleicher Darstellung während einer zweiten Phase des Werkzeugwechsels,
- Figur 5: die Maschine in gleicher Darstellung wie Figur 3 und 4 während einer dritten Phase des Werkzeugwechsels,
- Figur 6: die Maschine gemäß Figur 5 im Horizontalschnitt gemäß der Linie VI-VI in Figur 5,
- Figur 7: die Maschine in gleicher Darstellungsweise wie in Figur 6, nun während einer vierten Phase des Werkzeugwechsels,
- Figur 8: die Maschine aus Figur 7 gemäß der Schnittlinie VIII-VIII in Figur 7,
- Figur 9: die Maschine in einer Frontalansicht nach vollzogenem Werkzeugwechsel,
- Figur 10: die Maschine in einer Teil-Draufsicht, teils im Horizontalschnitt, während der Übergabe eines Werkzeuges in ein Werkzeugmagazin,
- Figur 11: die Maschine aus Figur 10 während der Übernahme eines Werkzeuges aus dem Werkzeugmagazin,
- Figur 12: die Maschine im Querschnitt gemäß der Schnittlinie XII-XII in Figur 11,
- Figur 13: eine zweite Ausführung der Werkzeugmaschine, in einer Darstellung entsprechend der Figur 3, in einer ersten Phase eines Werkzeugwechsels,
- Figur 14: die Maschine aus Figur 13 im Querschnitt entsprechend der Schnittlinie XIV-XIV in Figur 13,
- Figur 15: die Maschine in einer Ansicht gemäß Figur 13, nun in einer zweiten Phase des Werkzeugwechsels,
- Figur 16: die Maschine gemäß Figur 13 während einer dritten Phase des Werkzeugwechsels,
- Figur 17: die Maschine gemäß Figur 13 in einer Endphase des Werkzeugwechsels,
- Figur 18: einen Werkzeughalter als Teil der Maschine, in Draufsicht in vergrößerter Darstellung,
- Figur 19: den Werkzeughalter aus Figur 18, nun im Horizontalschnitt und bestückt mit einem Werkzeug,
- Figur 20: den Werkzeughalter aus Figur 19 im Schnitt entlang der Linie XX - XX in Figur 19,
- Figur 21: den Werkzeughalter aus Figur 19 in einer Seitenansicht entsprechend der Blickrichtung XXI in Figur 19, zusammen mit einem Schieber für die Übergabe des Werkzeuges in ein Werkzeugmagazin und
- Figur 22: den Werkzeughalter und den Schieber in gleicher Darstellungsweise wie Figur 21, nun aber nach Übergabe des Werkzeuges an das Werkzeugmagazin.

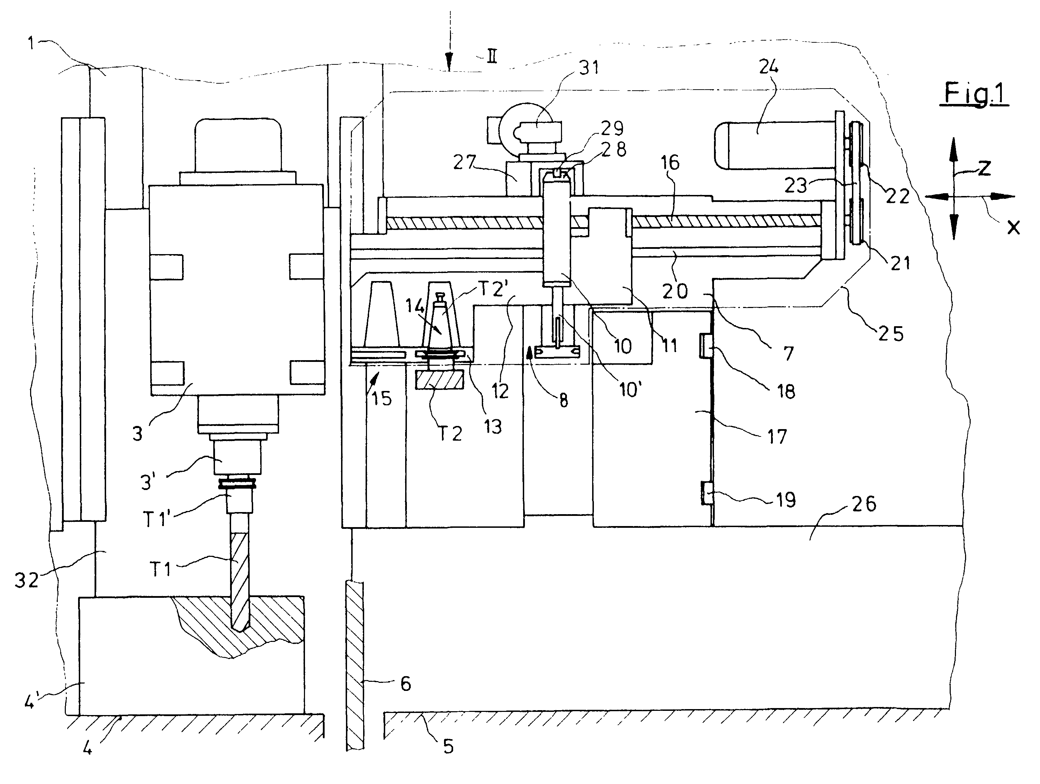

Der in Figur 1 gezeigte Ausschnitt aus einer Werkzeugmaschine zeigt links oben einen Fahrständer 1, an welchem mittels eines hier verdeckten Vertikalschlittens ein Spindelstock 3 verfahrbar geführt ist. Der Spindelstock 3 ist mittels einer CNC-Steuerung in den drei Raumkoordinaten x, y und z verfahrbar, wobei die x- und die z-Richtung in der Ebene der Figur 1 liegen und die y-Richtung senkrecht zur Zeichnungsebene verläuft.

Im Spindelstock 3 ist eine Arbeitsspindel 3' drehantreibbar gelagert, wobei in Figur 1 die Drehachse der Arbeitsspindel 3' in Vertikalrichtung, entsprechend der z-Richtung, verläuft. In die Arbeitsspindel 3' sind unterschiedliche Werkzeuge einsetzbar, wobei gemäß Figur 1 ein Werkzeug T1, hier ein Bohrer, mittels seines Werkzeugschafts T1' verdrehfest in die Arbeitsspindel 3' eingesetzt ist. Mit dem Werkzeug T1 wird ein Werkstück 4' bearbeitet, hier mit einer Bohrung versehen, wobei das Werkstück 4' auf einem ersten Werkstücktisch 4 fixiert ist.

Rechts vom Werkstücktisch 4 ist ein zweiter Werkstücktisch 5 vorgesehen, wobei die beiden Werkstücktisch 4, 5 durch eine Trennwand 6 voneinander getrennt sind. Während auf dem in der Zeichnung linken Werkstücktisch 4 gerade das Werkstück 4' bearbeitet wird, kann auf dem rechten Werkstücktisch 5 ein bereits bearbeitetes Werkstück abgenommen und/oder ein zu bearbeitendes neues Werkstück manuell aufgespannt werden, wobei durch die Trennwand 6 das Bedienungspersonal gegenüber bewegten Teilen der Werkzeugmaschine geschützt ist. Zum Schutz der hier nicht sichtbaren, im Hintergrund liegenden Antriebselemente für das Verfahren der Arbeitsspindel 3' ist hinter dem Spindelstock 3 ein Teleskopblech 32 als Schutzeinrichtung angebracht.

Rechts vom Spindelstock 3 sind im Hintergrund ein Werkzeugmagazin 8 und davor die Teile einer Werkzeugwechseleinrichtung für einen automatischen Werkzeugwechsel angeordnet. Die Werkzeugwechseleinrichtung umfaßt u.a. einen Wechslerschlitten 11, der entlang einer Linearführung 20 in x-Richtung verfahrbar ist. Für das Verfahren des Wechslerschlittens 11 ist hier ein NC-Antrieb vorgesehen, der aus einem Servomotor 24 und einer Kugelrollspindel 16 besteht, wobei das Drehmoment vom Servomotor 24 mittels eines Zahnriemens 23 und zweier Zahnriemenscheiben 21, 22 zur Kugelrollspindel übertragen wird. Durch Einschalten des Servomotors 24 wird demnach der Wechslerschlitten 11 in x-Richtung vorwärts oder rückwärts bewegt.

Der Wechslerschlitten 11 weist einen nach links in Richtung zum Spindelstock 3 weisenden Wechslerarm 12 auf, der die Form einer flachen, in Vertikalebene liegenden Platte hat. An seinem dem Spindelstock 3 zugewandten Endbereich verbreitert sich der Wechslerarm 12 nach unten und trägt dort einen rechtwinklig nach vorn weisenden Werkzeugträger 13, der aus zwei Werkzeughaltern 14 und 15 besteht. In dem ersten, in der Zeichnung rechten Werkzeughalter 14 ist ein Werkzeug T2 mit seinem Werkzeugschaft T2' gehaltert; der zweite Werkzeughalter 15, der in der Zeichnung links angeordnet ist, ist leer. Damit ist der Wechslerschlitten 11 auf einen bevorstehenden automatischen Werkzeugwechsel vorbereitet, der weiter unten noch näher erläutert werden wird.

Weiterhin umfaßt die Werkzeugwechseleinrichtung einen Schieber 10, dessen Schieberichtung quer zur Bewegungsrichtung des Wechslerschlittens 11, nämlich in y-Richtung verläuft. Mittels des Schiebers 10, der einen Greifer 10' an seinem unteren Ende aufweist, kann jeweils ein Werkzeug T1, T2 zwischen dem im Hintergrund liegenden Werkzeugmagazin 8 und einem der Werkzeughalter 14, 15 transportiert werden. Auch dieser Werkzeugtransport wird im folgenden noch näher erläutert werden. Für den Antrieb des Schiebers 10 ist oberhalb von diesem eine Antriebseinrichtung vorgesehen, die im wesentlichen aus einem Getriebebremsmotor 31 besteht, der mittels einer Führungsschiene 29 und eines Schlittens 28 den Schieber 10 bedarfsweise vor und zurück bewegt. Die Teile des Antriebes für den Schieber 10 sind in einem Gehäuse 27 untergebracht.

Rechts vom Schieber 10 und vom Wechslerschlitten 11 ist ein Teil eines Werkzeugmagazingehäuses 7 erkennbar, durch das das Werkzeugmagazin 8 verdeckt und geschützt wird. Der rechte untere Teil dieses Gehäuses 7 ist als Tür 17 ausgeführt, die an zwei Scharnieren 18, 19 verschwenkbar gehaltert ist. Bei geöffneter Tür 17 ist ein manuelles Be- und Entstücken des Werkzeugmagazins 8 von der Vorderseite der Werkzeugmaschine her möglich.

Durch eine strichpunktierte Linie 25 ist die Begrenzung einer Schutzhaube für die einzelnen Teile der Werkzeugwechseleinrichtung angedeutet, die im Betrieb der Werkzeugmaschine die beweglichen Teile verdeckt und so gegen Eintritt von Spänen und dgl. schützt.

Schließlich zeigt die Figur 1 unten rechts noch eine Trennwand 26, die den Arbeitsraum oberhalb der Werkstücktische 4, 5 und die Antriebsteile der Werkzeugmaschine für den Verschub in x-Richtung voneinander trennt.

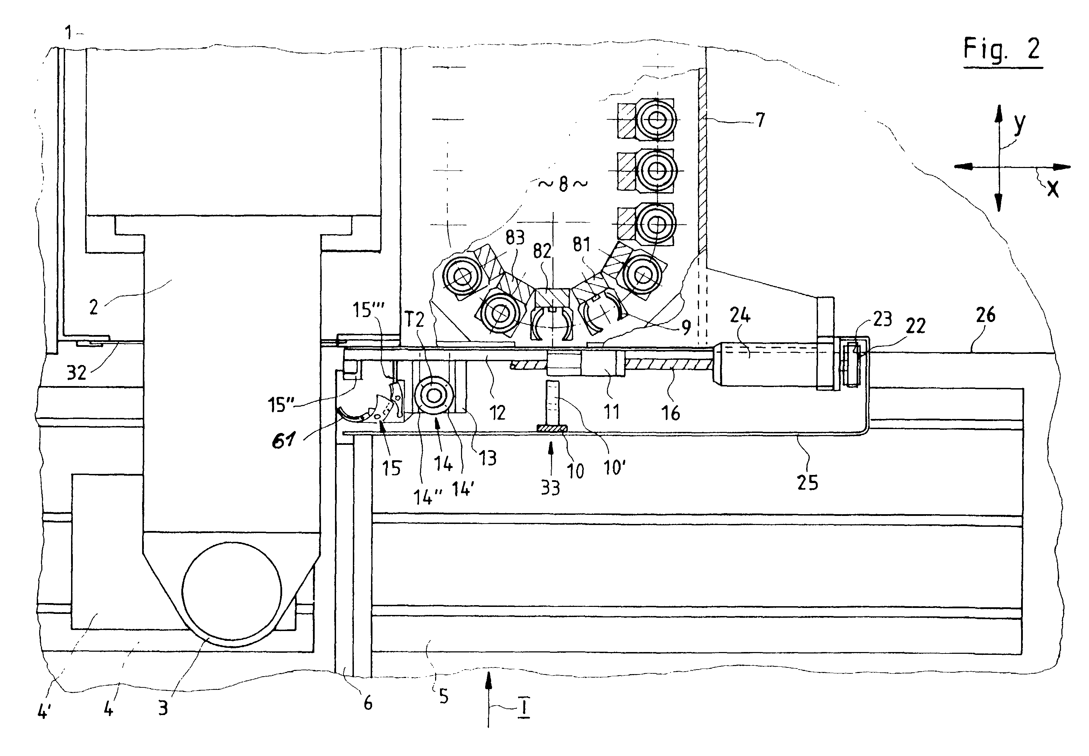

Figur 2 zeigt die Werkzeugmaschine aus Figur 1 in Draufsicht gemäß der Blickrichtung II in Figur 1, wobei die Werkzeugmaschine teilweise im Horizontalschnitt dargestellt ist. Außerdem ist unten in Figur 2 mit dem Pfeil I die Blickrichtung angegeben, in der in Figur 1 die Werkzeugmaschine dargestellt ist.

Links oben in Figur 2 ist wieder der Fahrständer 1 erkennbar, an welchem der nun in Draufsicht sichtbare Vertikalschlitten 2 gehaltert ist. An dem Vertikalschlitten 2 ist vorne, d.h. in Figur 2 unten, der Spindelstock 3 angebracht, aus dem die hier nicht sichtbare Arbeitsspindel nach unten hin vorragt. Der Vertikalschlitten 2 ist relativ zum Fahrständer 1 in Vertikalrichtung, d.h. in z-Richtung verfahrbar. Weiterhin ist der Fahrständer 1 zusammen mit dem Vertikalschlitten 2 in y-Richtung verfahrbar. Schließlich ist der Fahrständer zusammen mit dem Vertikalschlitten 2 und dem Werkzeugmagazin 8 einschließlich der Werkzeugwechseleinrichtung in x-Richtung insgesamt verfahrbar.

Ganz unten in Figur 2 sind die beiden Werkstücktische 4, 5 sichtbar, die wieder durch die Trennwand 6 voneinander getrennt sind. Auf dem linken Werkstücktisch 4 ist das Werkstück 4' fixiert, das gerade bearbeitet wird.

Oben in der Mitte von Figur 2 ist das Werkzeugmagazin 8 sichtbar, das aus einer Magazinkette von mehreren Werkzeugwagen 81, 82, 83 besteht. Die Magazinkette aus den Werkzeugwagen 81, 82, 83 usw. ist hier lediglich teilweise dargestellt; sie besitzt einen ovalförmigen geschlossenen Verlauf, wodurch eine große Zahl von Werkzeugen vorgehalten werden kann. Die Werkzeugwagen sind durch eine NC-Steuerung entlang ihrer ovalförmigen Bahn verfahrbar, wobei ein jeweils benötigtes Werkzeug nach Bedarf in die Übergabeposition gebracht wird, in der sich hier gerade der Werkzeugwagen 82 befindet. Um das Werkzeugmagazin 8 herum ist das Gehäuse 7 angeordnet.

In Figur 2 unterhalb des Werkzeugmagazins, d.h. vor diesem ist der Wechslerschlitten 11 in Draufsicht erkennbar, wobei hier dessen flache Bauweise besonders deutlich wird. Durch den Wechslerschlitten 11 läuft die Kugelrollspindel 16, über deren rechtem Teil der Servomotor 24 für den Antrieb der Kugelrollspindel 16 liegt. Nach links hin ist der Wechslerarm 12 des Wechslerschlittens 11 sichtbar, der ebenfalls sehr flach baut. Am linken Endbereich des Wechslerarms 12 ist der Werkzeugträger 13 erkennbar, von dem aus sich die beiden Werkzeughalter 14, 15 nach vorne erstrecken. Figur 2 zeigt besonders deutlich, daß die beiden Werkzeughalter 14, 15 etwas unterschiedlich ausgeführt sind. Der erste, in der Zeichnung rechte Werkzeughalter 14 besitzt eine Führung 14', 14'', die in y-Richtung verläuft und sowohl nach vorne als auch nach hinten hin in y-Richtung offen ist. Im Unterschied dazu besitzt der zweite, in der Zeichnung linke Werkzeughalter 15 eine abgewinkelte Führung 15'', 15''', wobei diese in Richtung zum Spindelstock 3 bzw. dessen Vertikalschlitten 2 in x-Richtung offen ist und in Richtung zum Werkzeugmagazin 8 in y-Richtung offen ist. Auch in Figur 2 ist der erste Werkzeughalter 14 mit dem Werkzeug T2 bestückt, während der zweite Werkzeughalter 15 frei ist.

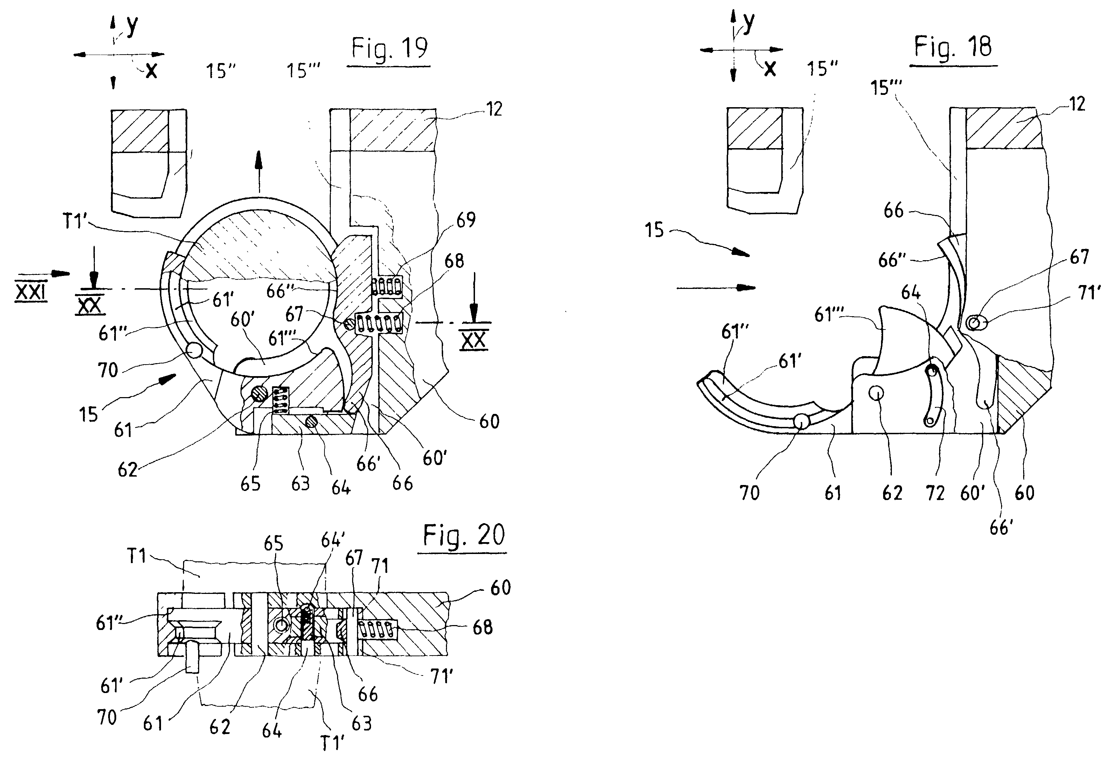

Zusätzlich zur Führung 15'', 15''' besitzt der linke Werkzeughalter 15 noch eine Arretierhebelanordnung, die aus zwei zweiarmigen Hebeln 61, 66 gebildet ist. In dem in Figur 2 gezeigten Zustand befindet sich die Arretierhebelanordnung 61, 66 in ihrer Offen-Stellung, in welcher ein Werkzeug durch Verschieben des Wechslerschlittens 11 in x-Richtung nach links in Eingriff mit einem hier nicht sichtbaren, in der Arbeitsspindel gehalterten Werkzeug bringbar ist, sobald die Arbeitsspindel mit dem Spindelstock 3 in eine entsprechende Werkzeugübergabeposition verfahren ist. Aufbau und Funktion der Arretierhebelanordnung 61, 66 werden später anhand der Figuren 18 bis 22 noch näher erläutert werden.

Rechts von den Werkzeughaltern 14, 15 ist der Schieber 10 mit seinem Greifer 10' erkennbar, der eine Übergabestation 33 für den Transport von Werkzeugen aus dem Magazin 8 in die Werkzeughalter 14, 15 und umgekehrt bildet, wobei für eine solche Übergabe der Wechslerschlitten 11 in eine entsprechende Position verfahren werden muß.

Mit der Ziffer 25 ist auch hier wieder die Schutzhaube bezeichnet, die die beweglichen Teile der Werkzeugwechseleinrichtung nach außen hin abdeckt. Rechts oben in Figur 2 ist schließlich noch die Trennwand 26 und ganz links in Figur 2 zwischen dem Fahrständer 1 und dem Werkstücktisch 4 die Trennwand 32 angedeutet.

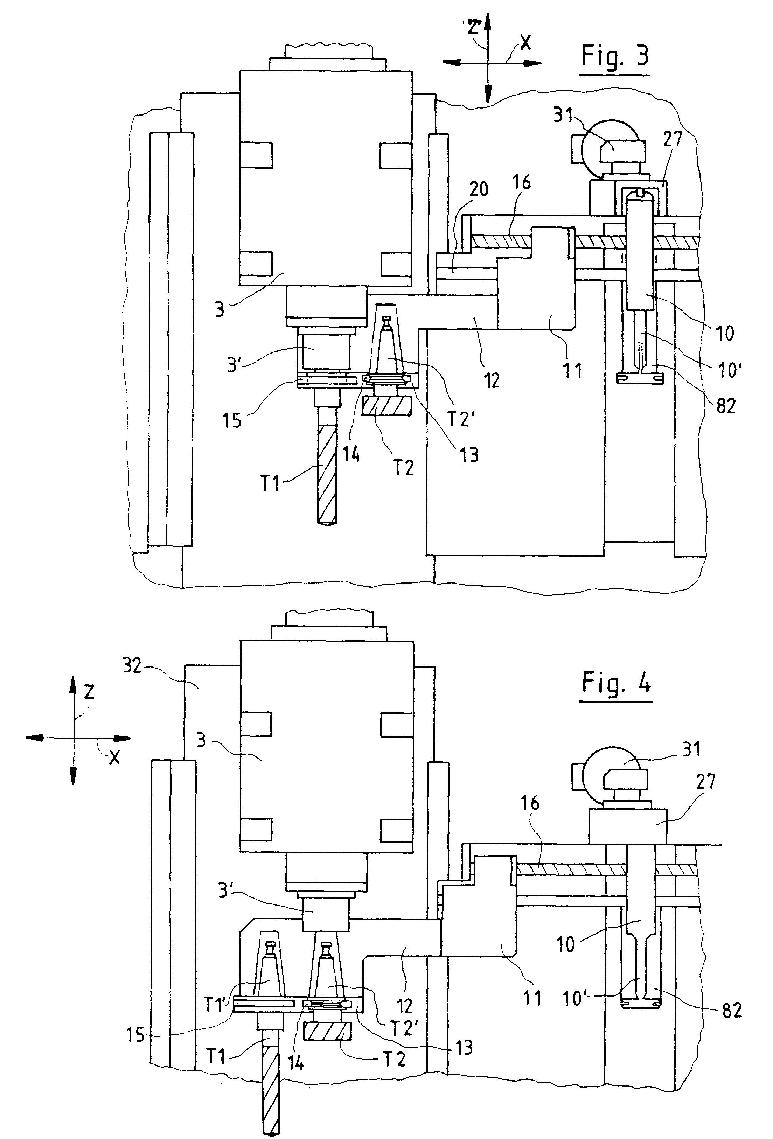

Anhand der Figuren 3 bis 8 wird nun im folgenden ein Werkzeugwechsel beschrieben, bei dem das Werkzeug T1 aus der Arbeitsspindel 3 entnommen und das neue Werkzeug T2 in die Arbeitsspindel 3' eingesetzt wird.

Figur 3 zeigt links oben den Spindelstock 3, der nun in eine bestimmte Werkzeugwechsel-Grundposition verfahren ist. Diese Werkzeugwechsel-Grundposition des Spindelstocks 3 ist dadurch definiert, daß sie in z-Richtung in Höhe der Werkzeughalter 14, 15 liegt und in y-Richtung soweit wie möglich hinten liegt. Dabei ist der Verfahrweg des Spindelstocks 3 in y-Richtung so bemessen, daß er nach hinten über den eigentlichen Arbeitsbereich, der für die Bearbeitung von Werkstücken erforderlich ist, hinausgeht. In dieser Werkzeugwechselposition des Spindelstocks 3 ist die Arbeitsspindel 3' mit dem darin gehalterten Werkzeug T1 relativ zum Wechslerschlitten 11 und zu dessen Werkzeughalter 15 so ausgerichtet, daß durch einfaches geradliniges Vorfahren des Wechslerschlittens 11 in x-Richtung nach links der Werkzeughalter 15 in Eingriff mit dem Werkzeug T1 bringbar ist. Diese Eingriffsstellung ist in Figur 3 gezeigt. Sobald diese Eingriffsstellung erreicht ist, wird innerhalb des Spindelstocks 3 bzw. der Arbeitsspindel 3' der Verbindungsmechanismus zum Werkzeug T1 bzw. dessen hier nicht sichtbaren Werkzeugschaft gelöst und der Spindelstock 3 wird um einen gewissen Wegbetrag zusätzlich nochmals nach oben verfahren, bis der Werkzeugschaft des Werkzeuges T1 von der Arbeitsspindel 3' freigekommen ist. Hieran schließt sich nun ein weiteres Vorfahren des Wechslerschlittens 11 in x-Richtung nach links an, bis der Werkzeughalter 14 mit dem neuen Werkzeug T2 mit dessen Werkzeugschaft T2' genau konzentrisch zur Arbeitsspindel 3' unter dieser positioniert ist.

Dieser Zustand ist in Figur 4 dargestellt. Durch Absenken des Spindelstocks 3 gelangt nun der Werkzeugschaft T2' in das Innere der Arbeitsspindel 3' und wird darin durch die dort vorgesehenen Arretierungsmittel festgelegt.

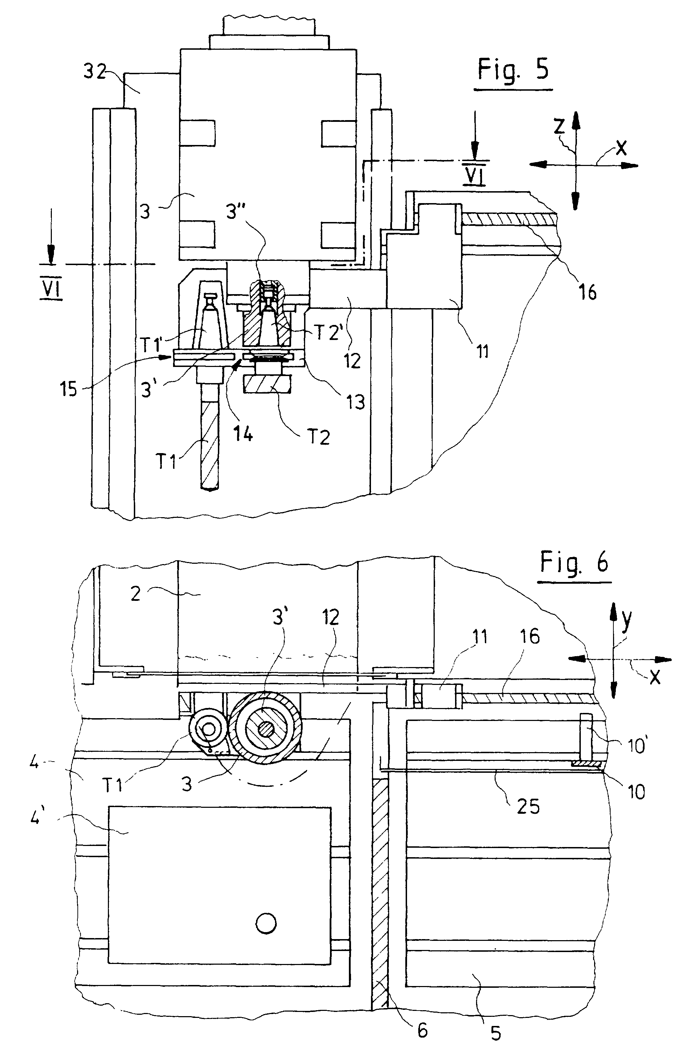

Den nun erreichten Zustand der Werkzeugmaschine zeigt die Figur 5. In dieser Figur 5 ist die Arbeitsspindel 3' teilweise geschnitten dargestellt, wodurch die Lage des Werkzeugschaftes T2' innerhalb der Arbeitsspindel 3' deutich sichtbar wird. Der Werkzeugschaft T2' ist mittels einer bekannten Spannzangenanordnung 3'' fest in die Arbeitsspindel 3' hineingezogen und so in Axialrichtung wie Umfangsrichtung sicher arretiert. Das zuvor aus der Arbeitsspindel 3' entnommene Werkzeug T1 befindet sich in dem Werkzeughalter 15 nun links von der Arbeitsspindel 3'.

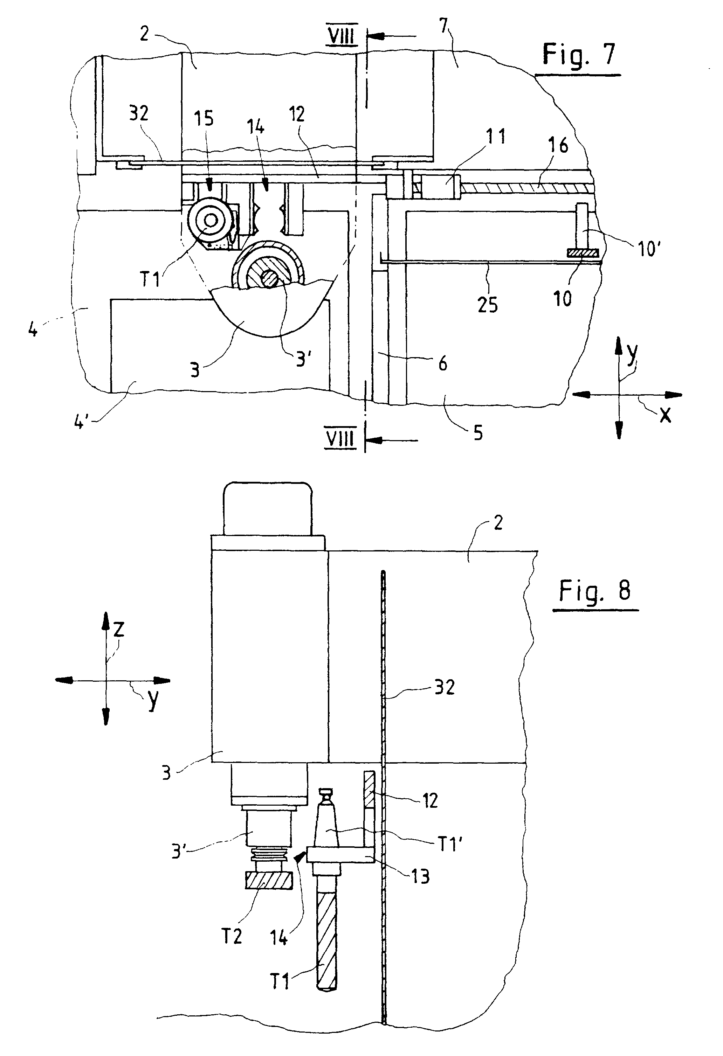

Den gleichen Zustand wie Figur 5 zeigt auch die Figur 6, nun allerdings im Horizontalschnitt entlang der Linie VI-VI in Figur 5. Oben in Figur 6 ist ein Teil des Vertikalschlittens 2 mit dem daran angebrachten Spindelstock 3 sichtbar, in dessen Zentrum die Arbeitsspindel 3' liegt. Links von der Arbeitsspindel 3' ist der Werkzeugschaft T1' des Werkzeuges T1 von oben erkennbar. Dabei wird das Werkzeug T1 von dem Arretierhebel 61 in seiner Position gehalten, um eine unerwünschte Verschiebung oder gar ein Herausfallen des Werkzeuges T1 bei einem Verfahren des Wechslerschlittens 11 in x-Richtung nach rechts auszuschließen.

Besonders deutlich wird aus der Figur 6, daß in dieser Stellung des Spindelstocks 3 die Arbeitsspindel 3' nicht mehr im Arbeitsbereich liegt, der für die Bearbeitung des Werkstücks 4' erforderlich ist. Damit liegt auch der Wechslerschlitten 11 mit seinem Wechslerarm 12 und den am daran vorgesehenen Werkzeugträger 13 liegenden Werkzeughaltern 14, 15 außerhalb des Arbeitsbereiches, so daß eine uneingeschränkte Zugänglichkeit der Werkstücktische 4, 5 jederzeit gewährleistet ist.

Nachdem nun das neue Werkzeug T2 in die Arbeitsspindel 3' eingesetzt ist, wird, was in Figur 7 gezeigt ist, der Spindelstock 3 mit der Arbeitsspindel 3' in y-Richtung nach vorne verfahren, wodurch das Werkzeug T2 aus dem zugehörigen Werkzeughalter 14 freikommt. Nachdem der Spindelstock 3 ausreichend weit vorgefahren ist, kann der Wechslerschlitten 11 mit den Werkzeughaltern 14, 15 wieder in x-Richtung nach rechts aus dem Bereich des Spindelstocks 3 zurückgefahren werden. Dabei ist nun der Werkzeughalter 14 leer, während der Werkzeughalter 15 nun, gesichert durch den Arretierhebel 61, das zuvor aus der Spindel 3' entnommene Werkzeug T1 trägt. Es kann dann eine weitere Bearbeitung des Werkstücks 4' mit dem neu eingesetzten Werkzeug T2 erfolgen.

Figur 8 der Zeichnung zeigt die Werkzeugmaschine im gleichen Zustand wie Figur 7, nun aber im Vertikalschnitt entlang der Linie VIII-VIII in Figur 7. Oben in Figur 8 ist wieder ein Teil des Vertikalschlittens 2 mit dem daran angeordneten Spindelstock 3 sichtbar, aus dem nach unten die Arbeitsspindel 3' mit dem nun darin arretierten Werkzeug T2 vorragt. Wie im Zusammenhang mit Figur 7 schon erläutert, ist der Spindelstock 3 um einen gewissen Weg in y-Richtung nach vorne, d.h. gemäß Figur 8 nach links verfahren, um das Werkzeug T2 aus dem zugehörigen Werkzeughalter 14 herauszubewegen. Wie Figur 8 verdeutlicht, kann nun das zuvor in der Spindel 3' benutzte Werkzeug T1 ohne Behinderung durch Verfahren des Wechslerschlittens 11 mit dessen Wechslerarm 12 in der hier senkrecht zur Zeichnungsebene verlaufenden x-Richtung aus dem Bereich der Arbeitsspindel 3' entfernt werden.

Rechts vom Wechslerarm 12 und dem Werkzeug T1 ist noch die Trennwand 32 angedeutet, die die rechts von ihr liegenden, hier nicht im einzelnen dargestellten Teile des Antriebes für den Fahrständer und den Vertikalschlitten 2 gegen einen Eintritt von Spänen und dergleichen schützt.

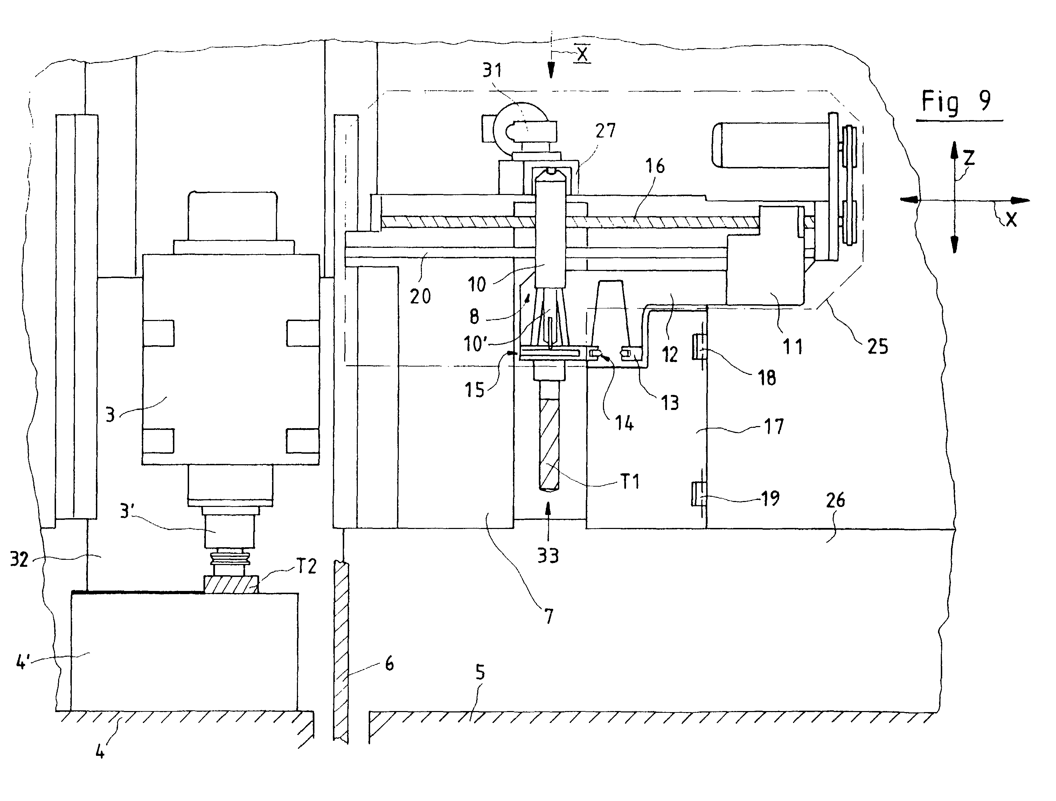

Anhand der Figuren 9 bis 12 wird nun im folgenden beschrieben, wie Werkzeuge zwischen dem Wechslerschlitten 11 und dem Werkzeugmagazin 8 übergeben werden.

Gemäß Figur 9 ist der Wechslerschlitten 11 nach Aufnahme des Werkzeuges T1 nun in x-Richtung soweit zurückgefahren, daß das Werkzeug T1 sich in der Position der Übergabestation 33 befindet. Oberhalb des Werkzeuges T1 und des Werkzeugträgers 13 ist der Schieber 10 erkennbar, der nun mittels seines Greifers 10' in Eingriff mit dem Werkzeug T1 tritt. Dabei ist der Greifer 10' so ausgebildet, daß der Werkzeugschaft von der Seite her in x-Richtung eingefahren werden kann. Durch Betätigung des Schiebers 10 wird nun das Werkzeug T1 in y-Richtung nach hinten in das Werkzeugmagazin 8 transportiert, das im Hintergrund hinter der Wand des Gehäuses 7 liegt. Der Wechslerschlitten 11 mit dem Werkzeughalter 15 bleibt dabei in seiner Position stehen. Das Entnehmen des Werkzeuges T1 aus dem Werkzeughalter 15 ist durch eine einfache Verschiebung des Schiebers 10 möglich, weil, wie anhand von Figur 2 erläutert, der Werkzeughalter 15 eine nach hinten, d.h. in Richtung zum Werkzeugmagazin 8 hin offene Führung besitzt.

Während dieser Übergabe des Werkzeuges T1 an das Werkzeugmagazin 8 kann das Werkstück 4' schon mittels des neu in die Spindel 3' eingesetzten Werkzeuges T2 weiter bearbeitet werden.

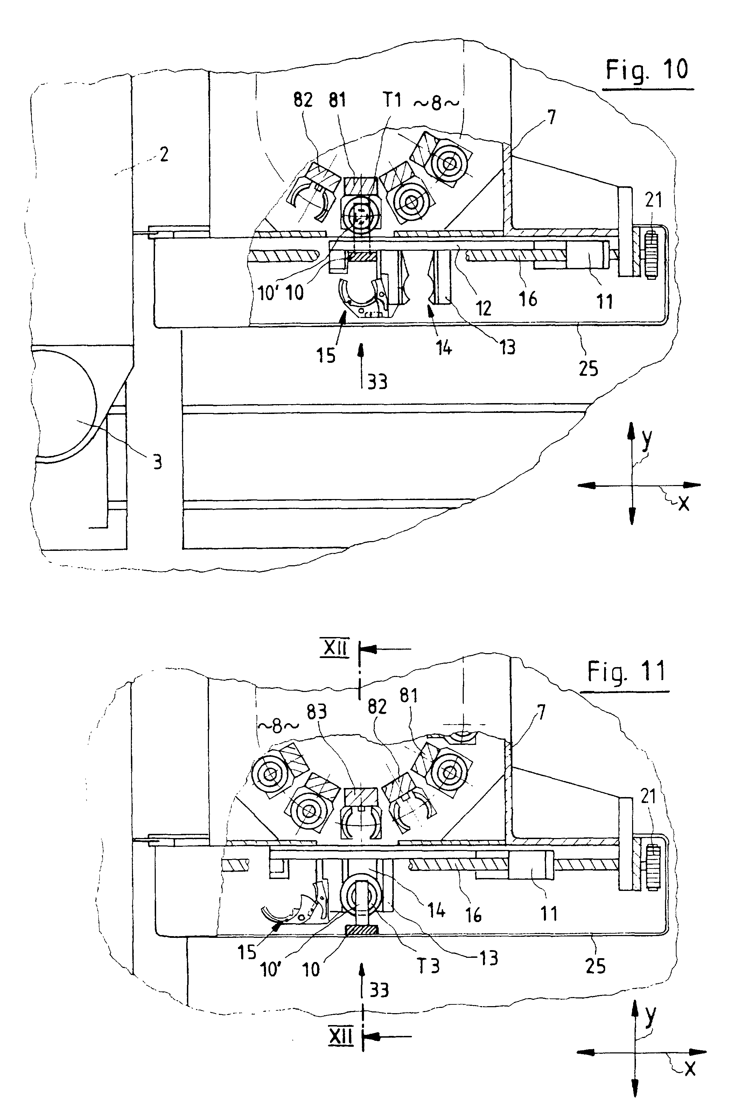

Figur 10 zeigt die Werkzeugmaschine im Zustand gemäß Figur 9, nun in Draufsicht entsprechend der Blickrichtung X in Figur 9. Hier wird besonders deutlich, daß der Werkzeughalter 15, mit dem das Werkzeug T1 in die Übergabestation 33 transportiert wurde, genau gegenüber dem Werkzeugwagen 81 positioniert ist. Gemäß Figur 10 hat hier schon der Schieber 10 mit seinem Greifer 10' das Werkzeug T1 aus dem Werkzeughalter 15 in den Werkzeugwagen 81 transportiert. Die Arretierhebelanordnung 61, 66 ist so ausgebildet, daß sie das Transportieren des Werkzeuges aus dem Werkzeughalter 15 in das Werkzeugmagazin 8 auch in ihrer Arretierstellung erlaubt. Hierzu sind die Arretierhebel 61, 66 gegen eine Federkraft ausreichend weit auslenkbar, so daß dann das gewünschte Verschieben lediglich unter Überwindung der Federkraft möglich ist.

Figur 11 zeigt nun in gleicher Darstellungsweise wie Figur 10 die Werkzeugmaschine geringfügig später in einem Zustand, in dem nun ein drittes Werkzeug T3 aus einem anderen Werkzeugwagen 83 ebenfalls mittels des Schiebers 10 und seines Greifers 10' in den Werkzeughalter 14 transportiert worden ist. Hierzu wurde zuvor der Schieber 10 zunächst aus dem Werkzeugmagazin 8 wieder in y-Richtung nach vorne, d.h. gemäß Figur 10 nach unten, verschoben. Bei dieser Verschiebungsbewegung des Schiebers 10 wird zugleich zwangsweise die Arretierhebelanordnung 61, 66 in ihre Offen-Stellung überführt, wie sie in Figur 11 dargestellt ist. In dieser Stellung der Arretierhebelanordnung 61, 66 ist die Werkzeugaufnahme 15 in x-Richtung nach links wieder offen, um ein aus der Spindel, die hier nicht dargestellt ist, zu entnehmendes Werkzeug aufzunehmen, wie dies anhand von Figur 2 schon beschrieben wurde. Daran anschließend wurde der Wechslerschlitten 11 um einen gewissen Wegbetrag nach links in x-Richtung verschoben, bis der vorgesehene Werkzeughalter 14 genau in der Übergabestation 33 positioniert ist; ebenso wurde zuvor der gewünschte Werkzeugwagen 83 in die Übergabeposition gefahren. Aus dieser Übergabeposition des Werkzeugwagens 83 transportiert dann der Schieber 10 das Werkzeug T3 aus dem Werkzeugwagen 83 in den rechten Werkzeughalter 14. Dieser dann erreichte Zustand ist in der Figur 11 dargestellt. Diese Vorgänge laufen vorzugsweise unter der Kontrolle einer NC-Steuerung ab.

Der zweite Werkzeughalter 15 ist nun wieder frei, so daß die Maschine für einen neuen Werkzeugwechsel vorbereitet ist, bei dem dann das jetzt in der Arbeitsspindel 3' befindliche Werkzeug T2 gegen das neue Werkzeug T3 ausgetauscht werden kann.

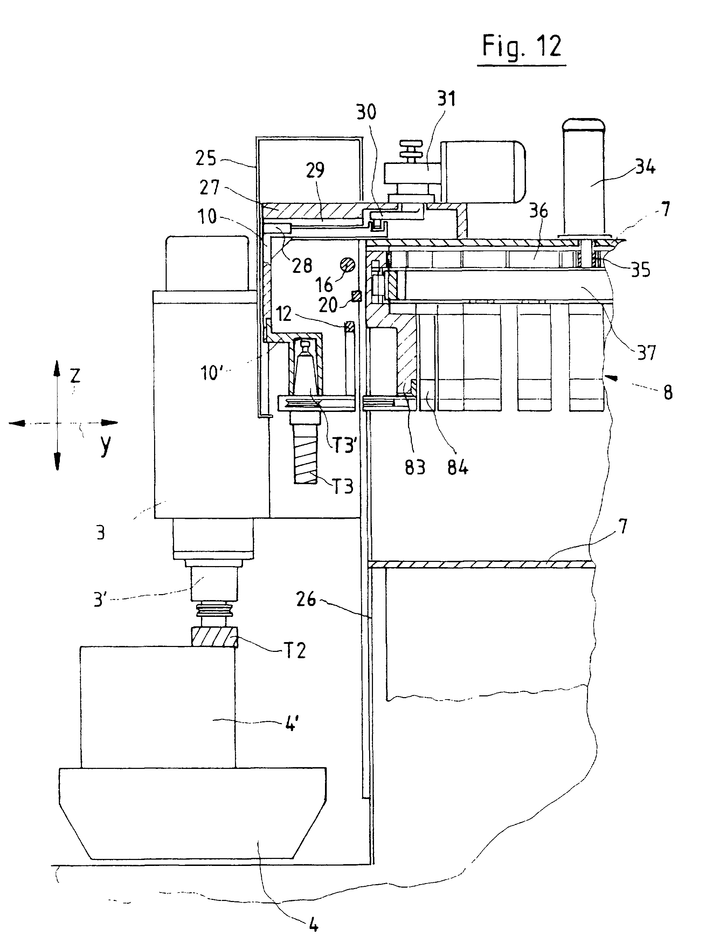

Der Zustand der Werkzeugmaschine gemäß Figur 11 ist auch in Figur 12 dargestellt, nun im Querschnitt entlang der Linie XII-XII in Figur 11. Insbesondere geht aus Figur 12 die Konstruktion des Schiebers 10 und der zugehörigen Antriebsmechanik hervor. Der Greifer 10' des Schiebers 10 hält hier noch den Werkzeugschaft T3' des neu aus dem Werkzeugmagazin 8 entnommenen Werkzeuges T3. Der Schieber 10 beschreibt dann einen zunächst nach vorne, dann nach oben und anschließend nach hinten, d.h. gemäß Figur 12 zunächst nach links, dann nach oben und dann nach rechts weisenden Verlauf. Hierdurch wird ausreichend Bewegungsfreiheit für den Schieber 10 relativ zur Kugelrollspindel 16 und zur Linearführung 20 geschaffen. Die Bewegung des Schiebers 10 in y-Richtung wird durch den Getriebebremsmotor 31 mittels eines Kurbeltriebes 30 und der Führungsschiene 29, die im Schiebergehäuse 27 verläuft, bewirkt.

Weiterhin zeigt die Figur 12 rechts einen Teil des Werkzeugmagazins 8 mit den Werkzeugwagen 83, 84 u.s.w.. Der Werkzeugwagen 83 befindet sich dabei gerade in der Übergabestellung unmittelbar vor dem Schieber 10 bzw. dessen Greifer 10'.

Die einzelnen Werkzeugwagen sind an einer Führungsbahn 37 geführt, entlang welcher sie mittels eines Servomotors 34 verfahrbar sind. Hierzu besitzen die Werkzeugwagen jeweils innenseitig oberhalb der Führungsbahn 37 je einen Zahnstangenabschnitt 36, wobei alle Werkzeugwagen in Form einer Kette miteinander verbunden sind. Der Servomotor 34 trägt auf seiner Welle ein Antriebsritzel 35, das in die Zahnstangenabschnitte 36 der Werkzeugwagen-Kette eingreift und so deren Transport bei Bedarf zur Auswahl eines gewünschten Werkzeuges bewirkt.

Unterhalb und oberhalb des Werkzeugmagazins 8 sind noch Teile von dessen Gehäuse 7 erkennbar. Links unten in Figur 12 ist der eine Werkstücktisch 4 mit dem darauf festgelegten Werkstück 4' sichtbar, das gerade von dem Werkzeug T2 bearbeitet wird. Rechts von dem Werkstück 4' ist wieder die Trennwand 26 erkennbar, die den links von ihr liegenden Arbeitsraum von den rechts von ihr angeordneten, hier nicht näher dargestellten Antriebselementen für den Fahrständer trennt.

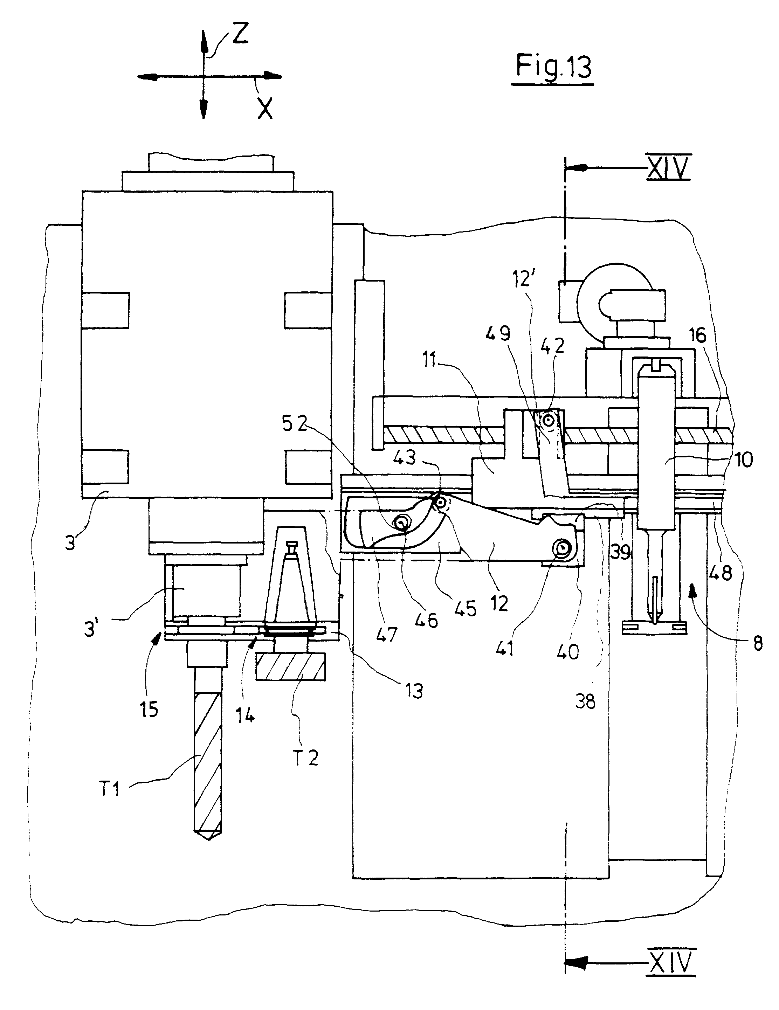

Wie zuvor beschrieben, führt bei dem bisher erläuterten Ausführungsbeispiel der Werkzeugmaschine der Spindelstock 3 die für den Werkzeugwechsel erforderlichen Bewegungen in z-Richtung aus. Im folgenden wird nun anhand der Figuren 13 bis 17 eine andere Ausführung der Werkzeugmaschine beschrieben, bei der der Spindelstock 3 während des Werkzeugwechsels keine Bewegungen in z-Richtung ausführen muß.

Figur 13 zeigt die geänderte Ausführung der Werkzeugmaschine in gleicher Teil-Ansicht wie die Figuren 3 und 4. Links in Figur 13 ist der Spindelstock 3 sichtbar, aus dem wieder nach unten die Arbeitsspindel 3' mit einem darin eingesetzten Werkzeug T1 vorragt. Mit diesem Werkzeug T1 ist bereits der zweite Werkzeughalter 15 des Wechslerschlittens 11 in Eingriff gebracht, um das Werkzeug T1 aus der Spindel 3' zu entnehmen.

Der Wechslerschlitten 11 besitzt in dieser geänderten Ausführung der Werkzeugmaschine eine andere Konstruktion als bei dem zuvor beschriebenen Ausführungsbeispiel der Werkzeugmaschine, wobei die Änderung dazu dient, die Werkzeughalter 14, 15 mit dem Werkzeugträger 13 am Wechslerarm 12 so bewegbar zu machen, daß sie die für den Werkzeugwechsel nötigen Bewegungen in der z-Richtung ausführen können. Hierzu ist der Wechslerarm 12 als verschwenkbarer Arm ausgeführt, der um die Schwenkachse 41 in der x-z-Ebene verschwenkbar gelagert ist. Der Wechslerschlitten 11 selbst ist, wie auch bei dem zuvor beschriebenen Ausführungsbeispiel der Werkzeugmaschine, in x-Richtung verfahrbar, wozu auch hier wieder eine Kugelrollspindel 16 dient. Durch dieses Verfahren des Wechslerschlittens 11 in x-Richtung wird gleichzeitig ohne zusätzliche Antriebsmittel auch die gewünschte Bewegung in z-Richtung erzeugt, wozu eine Steuerkurve 45, in der eine Kurvenrolle 43 abläuft, verwendet wird. Die Kurvenrolle 43 ist an dem Wechslerarm 12 gelagert und die Steuerkurve 45 ist ortsfest unterhalb des linken Endes der Kugelrollspindel 16 angebracht. Die Schwenkachse 41 ist in einem Hilfsschlitten 40 vorgesehen. Die Verwendung dieses Hilfsschlittens 40 ist hier erforderlich, um eine Relativbewegung in x-Richtung zwischen dem Hilfsschlitten 40 und dem eigentlichen Wechslerschlitten 11 zu ermöglichen.

Im Verlauf der Steuerkurve 45, die eine geschlossene umlaufende Bahn bildet, ist ein verschwenkbares, federbelastetes Sperrstück 47 angeordnet, das dafür sorgt, daß die Kurvenrolle 43 die Steuerkurve 45 nur in einer vorgebbaren Richtung, nämlich hier im Uhrzeigersinn, durchlaufen kann. Um die für das Durchlaufen der Steuerkurve 45 erforderliche Bewegungsfreiheit zwischen dem Wechslerarm 12 mit der Kurvenrolle 43 einerseits und der Steuerkurve 45 andererseits zu gewährleisten, ist die Schwenkachse 41 des Wechslerarms 12 in dem Hilfsschlitten 40 vorgesehen, der mittels eines Wagens 39 entlang einer Zusatz-Führungsschiene 38 in x-Richtung parallel zum übrigen Wechslerschlitten 11 verschiebbar ist. Weiterhin besitzt der Wechslerarm 12 einen annähernd nach oben verlaufenden zweiten Arm 12', der an seinem freien Ende eine Kulissenrolle 42 trägt, die in einer im Wechslerschlitten 11 vorgesehenen Kulisse 49 abrollt. Hierdurch sind der Wechslerschlitten 11 und der Hilfsschlitten 40 miteinander gekoppelt, wobei aber eine relative Beweglichkeit zueinander in x-Richtung gegeben ist.

Rechts vom Wechslerschlitten 11 ist wieder der Schieber 10 erkennbar, der sich nicht von der zuvor anhand des ersten Ausführungsbeispiels beschriebenen Konstruktion unterscheidet.

Bei einem vorzunehmenden Werkzeugwechsel wird zunächst, wie schon weiter oben anhand der Figuren 1 bis 12 beschreiben, aus dem in Figur 13 nicht weiter sichtbaren Werkzeugmagazin 8 ein gewünschtes Werkzeug, hier das Werkzeug T2, in den ersten Werkzeughalter 14 überführt. Außerdem wird der Spindelstock 3 in seine Werkzeugwechsel-Grundposition verfahren. Danach wird der Wechslerschlitten 11 durch Drehung der Kugelrollspindel 16 in x-Richtung nach links bewegt, bis der zuvor noch freie Werkzeughalter 15 in Eingriff mit dem noch in der Spindel 3' befindlichen, aus dieser zu entnehmenden Werkzeug T1 tritt. Bis hierhin führt der Wechslerarm 12 lediglich eine rein geradlinige Bewegung in x-Richtung nach links aus, da bisher auch die Kurvenrolle 43 lediglich geradlinig durch eine für diese vorgesehene, parallele zur Kugelrollspindel 16 verlaufende Laufschiene 48 läuft. Dieser Zustand der Werkzeugmaschine ist in Figur 13 dargestellt.

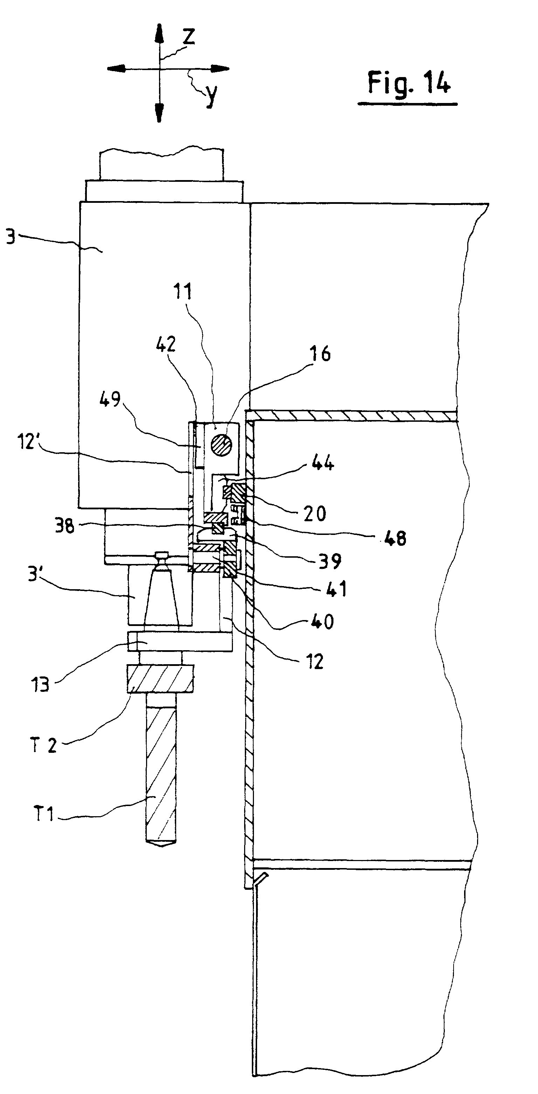

Den gleichen Zustand zeigt auch die Figur 14, nun aber im Querschnitt entsprechend der Schnittlinie XIV-XIV in Figur 13. Hinsichtlich der Bedeutung der einzelnen Bezugsziffern in Figur 14 wird auf die Beschreibung von Figur 13 verwiesen.

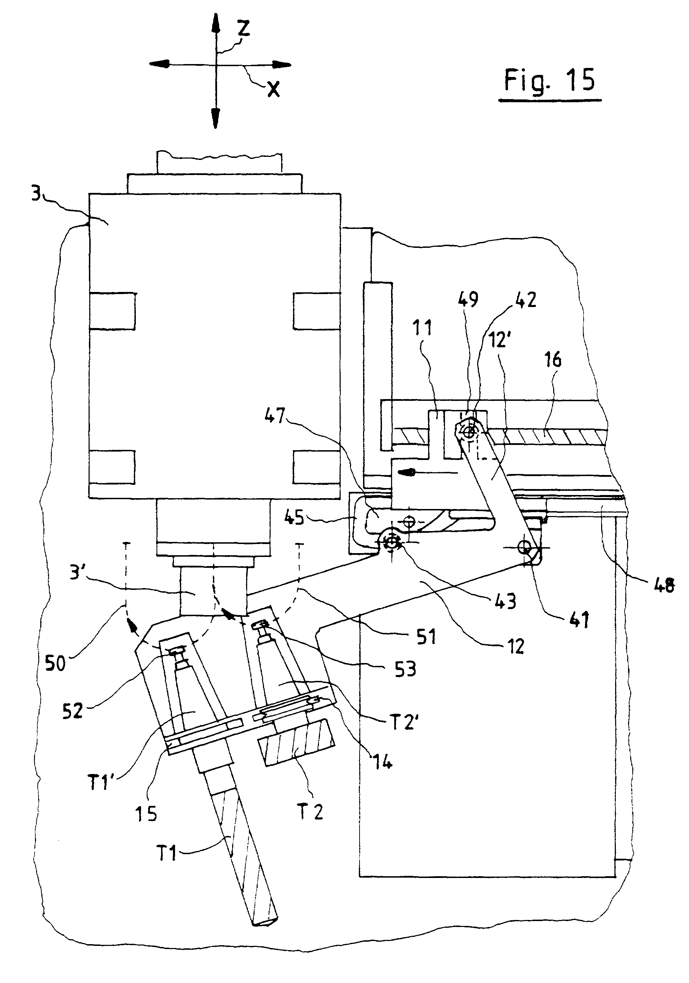

Aus Figur 15 ist nun der weitere Verlauf des Werkzeugwechsels entnehmbar. Durch weiteres Verfahren des Wechslerschlittens 11 in x-Richtung nach links, wie durch den am Wechslerschlitten 11 eingezeichneten Pfeil angedeutet ist, gelangt nun die Kurvenrolle 43 in die Steuerkurve 45 und wird durch diese schräg nach unten links ausgelenkt, wodurch sich eine Schwenkbewegung des Wechslerarms 12 um die Schwenkachse 41 entgegen dem Uhrzeigersinn ergibt. Hieraus resultiert eine Bewegungsbahn der Werkzeuge T1 und T2 bzw. der Werkzeugschäfte T1', T2' entsprechend den Linien 50, 51, wobei die Bewegungsrichtung durch Pfeilspitzen dargelegt ist. Allein durch die weitere Verschiebung des Wechslerschlittens 11 in x-Richtung nach links wird also die Aushubbewegung zum Entfernen des Werkzeuges T1 aus der Spindel 3' bewirkt. Dieselbe Verschiebung bewirkt auch schon den ersten Teil der Einhubbewegung für das neu einzusetzende Werkzeug T2 in die Spindel 3'.

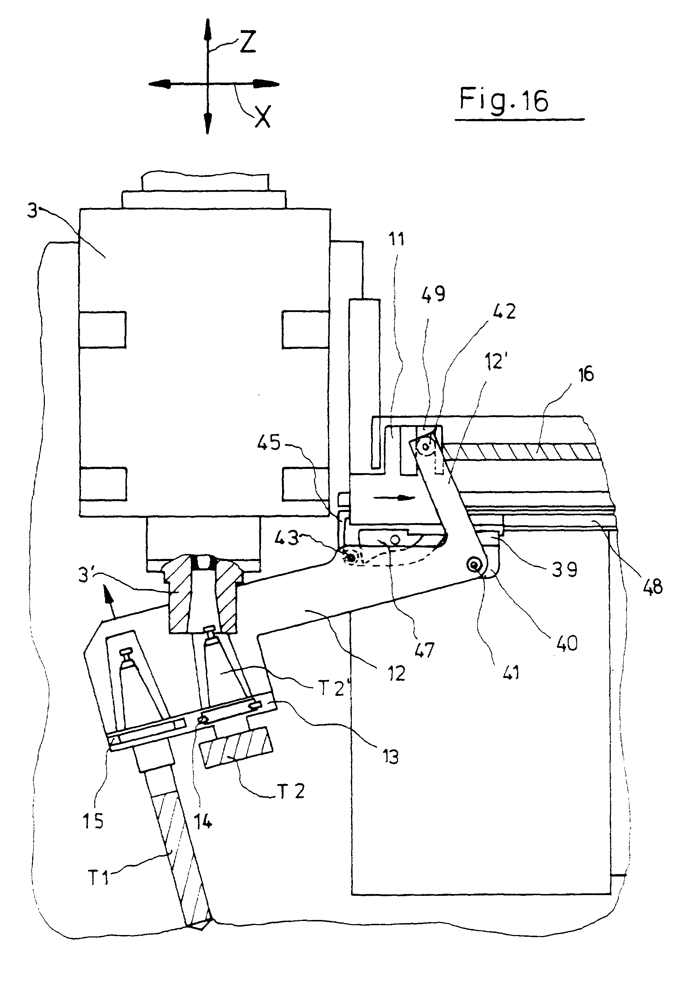

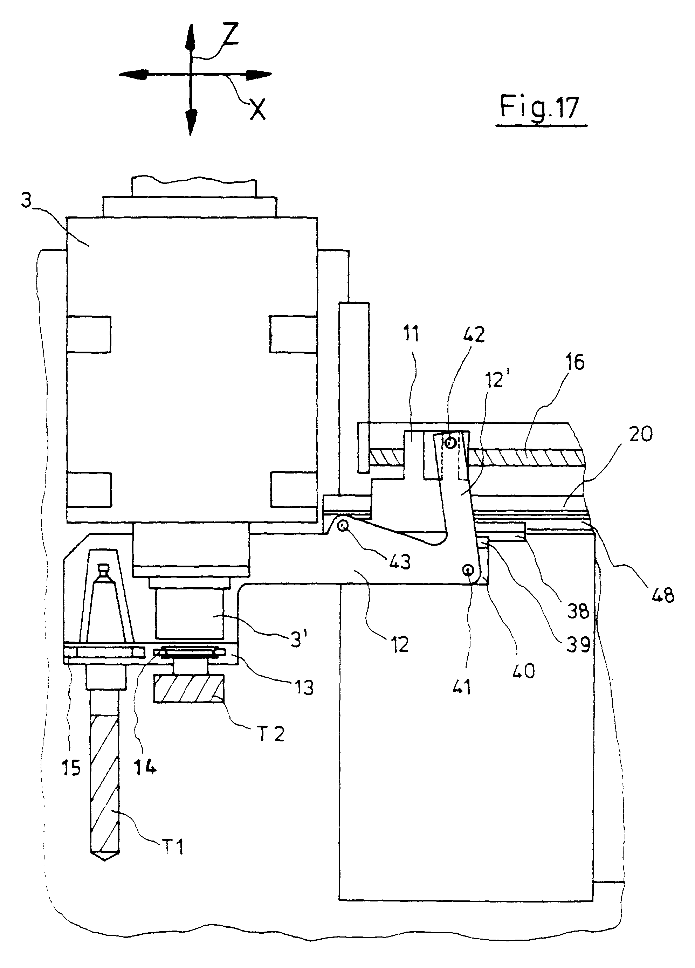

Nachdem nun der Wechslerschlitten 11 seine äußerste Position in x-Richtung nach links erreicht hat, nimmt der Wechslerarm 12 die in Figur 16 dargestellten Stellung ein. Ab diesem Punkt erfolgt durch Änderung der Drehrichtung der Kugelrollspindel 16 nun eine umgekehrte Bewegung des Wechslerschlittens 11, nämlich jetzt in x-Richtung nach rechts, wie durch den Bewegungspfeil am Wechslerschlitten 11 gezeigt ist. Diese Umkehr der Bewegungsrichtung des Wechslerschlittens 11 führt nun zu einer Verschwenkung des Wechslerarms 12 mit dem Werkzeugträger 13 um die Schwenkachse 41 im Uhrzeigersinn, weil die Kurvenrolle 43 durch das Sperrstück 47 an einer Bewegung in x-Richtung zurück nach rechts gehindert wird; lediglich eine Bewegung der Kurvenrolle 43 in z-Richtung nach oben durch den weiteren Verlauf der Steuerkurve 45 ist jetzt möglich, wodurch das Werkzeug T2 bzw. dessen Werkzeugschaft T2' in die Spindel 3' eingehoben wird. Nach einem für das Einheben des Werkzeuges T2 in die Spindel 3' ausreichenden Verschiebungsweg des Wechslerschlittens 11 in x-Richtung nach rechts wird dessen Bewegung vorübergehend gestoppt. In diesem Zustand kann das Werkzeug T2 in der Spindel 3' arretiert werden, wonach dann der Spindelstock 3 durch Verfahren in y-Richtung nach vorne zusammen mit dem Werkzeug T2 aus dem Werkzeugträger 13 herausfährt. Sobald der Spindelstock 3 ausreichend weit in y-Richtung nach vorne gefahren ist, kann durch erneutes Verfahren des Wechslerschlittens 11 in x-Richtung nach rechts der Wechslerarm 12 mit dem Werkzeugträger 13 und dessen Werkzeughaltern 14, 15 in den Bereich des in Figur 17 nicht sichtbaren Werkzeugmagazins 8 verfahren werden, um dort das aus der Spindel 3' entnommene Werkzeug T1 wieder in das Werkzeugmagazin 8 zu übergeben und bereits ein neues, als nächstes einzusetzendes Werkzeug aus dem Werkzeugmagazin 8 in den Werkzeugträger 13 aufzunehmen.

Da bei dieser Ausführung der Werkzeugmaschine gemäß den Figuren 13 bis 17 die Spindel 3' und der Spindelstock 3 während des Werkzeugwechsels in ihrer einmal eingenommenen Werkzeugwechsel-Grundposition verharren können, wird eine sehr kurze Werkzeugwechselzeit erreicht. Die kurze Werkzeugwechselzeit wird insbesondere dadurch begünstigt, daß aufgrund des Stillstandes des Spindelstocks 3 zwischen dessen NC-Steuerung und der NC-Steuerung für den Wechslerschlitten 11 kein Informationsaustausch stattfinden muß. Für den Werkzeugwechsel ist allein die NC-Steuerung des Wechslerschlittens 11 verantwortlich, was den programmtechnischen Ablauf vereinfacht und damit beschleunigt.

Figur 18 zeigt den Werkzeughalter 15 mit seiner Arretierhebelanordnung 61, 66 in vergrößerter Darstellung in Draufsicht, wobei hier die Arretierhebelanordnung 61, 66 ihre Offen-Stellung einnimmt. In dieser Stellung kann in x-Richtung von links her ein Werkzeug in die Werkzeugaufnahme eingeführt werden bzw. kann der Werkzeughalter 15 durch Bewegung in x-Richtung nach links in Eingriff mit einem Werkzeug in einer hier nicht dargestellten Arbeitsspindel gebracht werden.

Der erste Arretierhebel 61 ist um eine Schwenkachse 62 schwenkbar gelagert, die in z-Richtung verläuft. Ebenso ist der zweite Arretierhebel 66 um eine Schwenkachse 67 verschwenkbar, die ebenfalls in z-Richtung verläuft.

Der erste Arretierhebel 61 besitzt zwei Hebelenden 61', 61''' und hat insgesamt einen bogenförmigen Verlauf. Der Hebel 61 ist im Bereich seines Hebelendes 61' mit einer Kontur 61'' versehen, die an den Halteflansch und eine Halterille im Werkzeugschaft T1' des Werkzeuges T1 und auch der anderen Werkzeuge, die zum Einsatz kommen, angepaßt ist. Die Schwenkachse 62 ist durch einen Bolzen gebildet, der fest in einem eingesenkten Bereich 60' einer Halteplatte 60 angebracht ist. Begrenzt wird der Verschwenkungsweg des Arretierhebels 61 durch einen Bolzen 64, der in einer nierenförmigen Öffnung 72 auf einem Kreisabschnitt um die Schwenkachse 62 herum bewegbar ist.

Im Unterschied dazu ist die Schwenkachse 67, die ebenfalls durch einen Bolzen gebildet ist, in einem Langloch 71' in der Halteplatte 60 gelagert, wobei sich eine gewisse Verschiebbarkeit der Schwenkachse 67 in x-Richtung ergibt. Auch der zweite Arretierhebel 66 besitzt zwei Hebelenden 66', 66'', wovon das Ende 66'' nach oben und das Hebelende 66' nach unten, d.h. in y-Richtung nach hinten bzw. nach vorne, weist.

Figur 19 zeigt den Zustand des Werkzeughalters 15 nach der Aufnahme eines Werkzeuges T1. Das Werkzeug T1 wird nun im Bereich seines Werkzeugschaftes T1' von den Arretierhebeln 61, 66 über einen Teil seines Umfanges, der größer als 180° ist, umfaßt. Der Übergang der Arretierhebelanordnung 61, 66 aus der Offen-Stellung gemäß Figur 18 in die Arretierstellung gemäß Figur 19 erfolgt einfach dadurch, daß beim Heranfahren des Werkzeughalters 15 an das Werkzeug T1 dessen Werkzeugschaft T1' gegen das rechte Hebelende 61''' des ersten Arretierhebels 61 stößt. Hierdurch erfolgt eine Verschwenkung des Arretierhebels 61 im Uhrzeigersinn, bis die Verschwenkungsendstellung des Arretierhebels 61 erreicht ist. In dieser Verschwenkungsendstellung erfolgt eine selbsttätige Arretierung des Arretierhebels 61 durch das untere Ende 66' des zweiten Arretierhebels 66, indem der Werkzeugschaft T1' gegen das obere Ende 66'' des zweiten Arretierhebels 66 drückt und diesen so ebenfalls im Uhrzeigersinn verschwenkt. Das untere Ende 66' des zweiten Arretierhebels 66 faßt dadurch hinter eine Sperrklinke 63, die mit dem ersten Arretierhebel 61 um eine Schwenkachse 64 verschwenkbar verbunden ist. Die Arretierhebelanordnung 61, 66 ist somit in ihrer Arretierstellung festgelegt.

In diesem Zustand des Werkzeughalters 15 erfolgt das Verfahren in x-Richtung aus dem Bereich der Arbeitsspindel in den Bereich des Werkzeugmagazins. Die Übergabe des Werkzeuges T1 in das Werkzeugmagazin 8 erfolgt in Richtung des oben über dem Werkzeugschaft T1' eingezeichneten Pfeils. Dabei erfolgt diese Übergabe des Werkzeuges T1 in das Werkzeugmagazin, ohne daß dafür eine Öffnung der Arretierhebelanordnung 61, 66 erforderlich ist. Um dennoch ein Herausbewegen des Werkzeugschaftes T1' aus der Arretierhebelanordnung 61, 66 zu ermöglichen, sind diese Arretierhebel 61, 66 durch Druckfedern 65, 68, 69 vorbelastet. Der Schieber, der den Transport des Werkzeuges T1 aus dem Werkzeughalter 15 in das Werkzeugmagazin bewirkt, bringt bei seiner Transportbewegung eine solche Kraft auf, daß die jeweils oberen Enden 61' und 66'' der beiden Hebel 61, 66 ausreichend weit auseinandergedrückt werden, so daß der Werkzeugschaft T1' aus dem Werkzeughalter 15 herausbewegt werden kann.

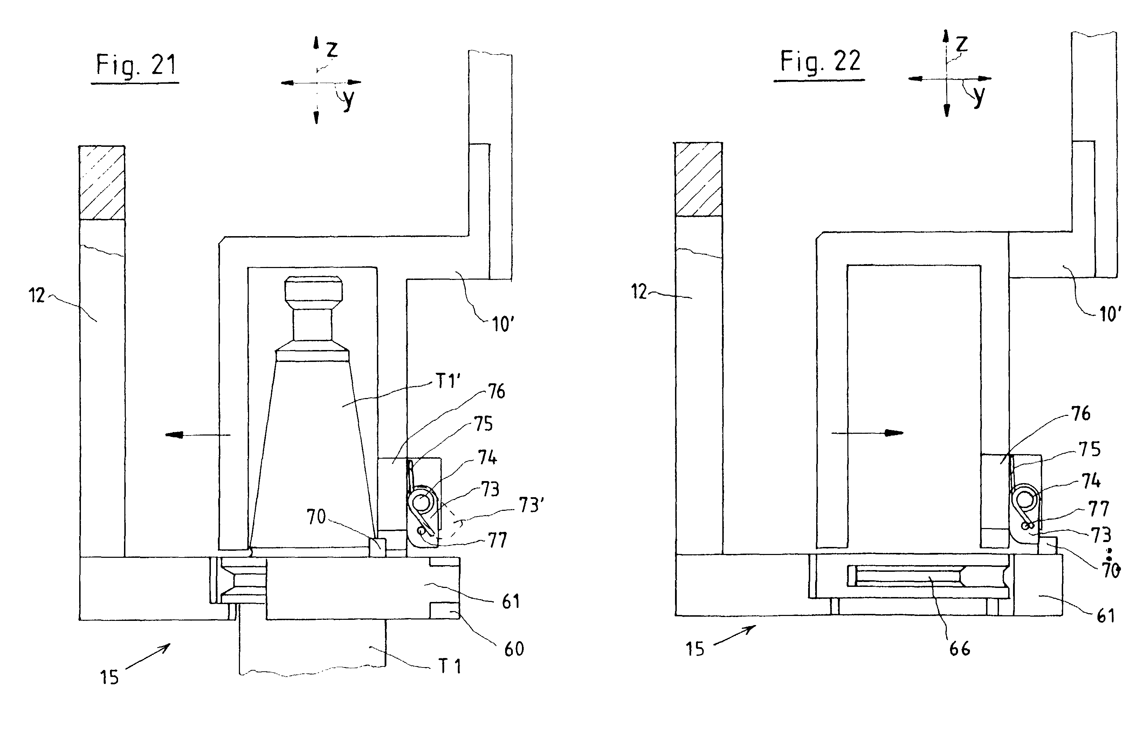

In den Figuren 18 und 19 ist weiterhin ein Stift 70 erkennbar, der an dem ersten Arretierhebel 61 angebracht ist. Der Stift 70 hat zum einen die Funktion einer Verdrehsicherung für den Werkzeugschaft T1', indem er sich bei aufgenommenem Werkzeug T1 in eine entsprechende Vertiefung des Werkzeugschaftes T1' einlegt. Außerdem hat der Stift 70 eine Funktion als Betätigungselement für eine Überführung der Arretierhebelanordnung 61, 66 in deren Offen-Stellung, die später anhand der Figuren 21 und 22 noch erläutert werden wird.

Figur 20 zeigt den Werkzeughalter 15 aus Figur 19 im Schnitt entlang der Linie XX - XX in Figur 19. Bezüglich der einzelnen Teile wird auf die Beschreibung der Figuren 18 und 19 verwiesen, wobei gleiche Bezugsziffern gleiche Teile benennen. Zusätzlich zeigt die Figur 20, daß das obere Ende des Lagerbolzens 64 mit einer gefederten Kugel 64' versehen ist, die eine Einrastung des ersten Arretierhebels 61 in dessen beiden Endstellungen bewirkt, wobei für die Überwindung dieser Rastung allerdings nur geringe Kräfte erforderlich sind.

Figur 21 zeigt den Werkzeughalter 15 zusammen mit dem Werkzeug T1 und dessen Werkzeugschaft T1' nun nach einem Verfahren in x-Richtung in der Übergabeposition unmittelbar vor dem Werkzeugmagazin, das hier links von dem Werkzeughalter 15 liegt. Die Blickrichtung der Figur 21 entspricht dem Pfeil XXI in Figur 19.

Weiterhin zeigt die Figur 21 den Schieber 10', der hier gerade in Eingriff mit dem Werkzeugschaft T1' gebracht ist, um das Werkzeug T1 aus dem Werkzeughalter 15 in das Werkzeugmagazin zu transportieren.

Rechts an dem rechts vom Werkzeugschaft T1' liegenden Teil des Schiebers 10 ist ein Haltestück 76 angebracht, an welchem mittels eines Lagerbolzens 74 eine verschwenkbare Nocke 73 gelagert ist. Durch eine Drehfeder 75 ist die Nocke 73 im Uhrzeigersinn vorbelastet. Das nockenseitige Ende der Drehfeder 75 stützt sich dabei an einem mit der Nocke 73 fest verbundenen Stift 77 ab. In ihrer Grundstellung liegt die Nocke 73 mit ihrer nach links weisenden Seite an dem Haltestück 76 an.

Wenn der Schieber 10, wie durch den Bewegungspfeil links vom Werkzeugschaft T1' angedeutet ist, in Richtung zum Werkzeugmagazin bewegt wird, läuft die Nocke 73 gegen den nach oben über den Arretierhebel 61 vorragenden Stift 70 hinweg, wobei die Nocke 73 entgegen dem Uhrzeigersinn ausschwenkt und dabei die strichpunktiert eingezeichnete Stellung 73' einnimmt. Bei dieser Bewegungsrichtung des Schiebers 10 hat also die Nocke 73 keinen Einfluß auf den Stift 70.

Anders verhält es sich bei der entgegengesetzten Bewegung des Schiebers 10 vom Werkzeugmagazin 8 zurück in den Bereich des Werkzeughalters 15, wie in Figur 22 dargestellt ist.

Der nach der Übergabe des Werkzeuges T1 an das Werkzeugmagazin 8 nun leere Schieber 10 trifft bei seiner Rückwärtsbewegung im Sinne des am Schieber 10 eingezeichneten Bewegungspfeiles mit seiner Nocke 73 auf den Stift 70 und zwar von dessen linker Seite her. Da die Nocke 73 in dieser Bewegungsrichtung nicht ausweichen kann, schiebt sie den Stift 70 vor sich her, bis dieser die in Figur 22 gezeigte Stellung erreicht. Durch dieses Verschieben des Stiftes 70 wird zugleich der damit fest verbundene erste Arretierhebel 61 in die in Figur 22 sichtbare Offen-Stellung bewegt. Die Sperrung des ersten Arretierhebels 61 durch das untere Ende 66' des zweiten Arretierhebels 66 wurde zuvor schon dadurch aufgehoben, daß das Werkzeug T1 aus dem Werkzeughalter 15 entfernt wurde. Nach dem Herausbewegen des Werkzeuges aus dem Werkzeughalter 15 kann nämlich, wie anhand von Figur 19 deutlich wird, die Druckfeder 69 den zweiten Arretierhebel 66 entgegen dem Uhrzeigersinn soweit verschwenken, daß das untere Ende 66' des zweiten Arretierhebels 66 von der Sperrklinke 63 wegbewegt wird. Damit steht einer Verschwenkung des ersten Arretierhebels 61 entgegen dem Uhrzeigersinn nichts mehr im Wege. Nach dieser Öffnungsbewegung der Arretierhebelanordnung 61, 66, die durch die den Stift 70 verschiebende Nocke 73 bewirkt wird, nimmt die Arretierhebelanordnung 61, 66 wieder die schon in Figur 18 gezeigte und beschriebene Offen-Stellung ein, in der ein neues Werkzeug aufgenommen werden kann.

## Patentansprüche

1. Werkzeugmaschine, insbesondere ein CNC-gesteuertes Bearbeitungszentrum, mit einem Maschinenrahmen mit mindestens einem Werkstücktisch (4, 5), mit einem am Maschinenrahmen geführten, eine drehantreibbare Arbeitsspindel (3') tragenden Spindelstock (3), der relativ zum Werkstücktisch (4, 5) in drei Raumkoordinaten (x-, y-, z-Richtung) verfahrbar ist, mit einem Werkzeugmagazin (8) zur Vorhaltung einer Anzahl von Werkzeugen (T1, T2, T3) und mit einer Werkzeugwechseleinrichtung, mit der automatisch Werkzeuge (T1, T2, T3) aus dem Werkzeugmagazin zur Arbeitsspindel (3') und umgekehrt transportierbar sind, wobei der Spindelstock (3) für einen Werkzeugwechsel in eine Werkzeugwechsel-Grundposition verfahrbar ist, die in x-Richtung neben der Werkzeugwechseleinrichtung und in y-Richtung außerhalb des Arbeitsbereiches für eine Werkstückbearbeitung liegt,
**dadurch gekennzeichnet,**
- **daß** die Werkzeugwechseleinrichtung einen in x-Richtung gesteuert verfahrbaren Wechslerschlitten (11) mit zwei Werkzeughaltern (14, 15) aufweist,
- **daß** die Werkzeugwechseleinrichtung und das Werkzeugmagazin (8) außerhalb des Arbeitsbereiches der Arbeitsspindel (3') für eine Werkstückbearbeitung liegen,
- **daß** aus dieser Grundposition heraus durch Verfahren des Wechslerschlittens (11) in x-Richtung ein aus der Arbeitsspindel (3') zu entnehmendes erstes Werkzeug (T1) in den ersten, zunächst unbelegten Werkzeughalter (15) übergebbar ist und ein in die Arbeitsspindel (3') einzusetzendes, aus dem Werkzeugmagazin herantransportiertes zweites Werkzeug (T2) aus dem zweiten Werkzeughalter (14) an die Arbeitsspindel (3') übergebbar ist, wobei für den Werkzeugwechsel gegebenenfalls erforderliche Hubbewegungen in z-Richtung zwischen Arbeitsspindel (3) und Werkzeug (T1, T2) entweder durch Verfahren des Spindelstocks (3) in der z-Richtung oder durch Bewegen der Werkzeughalter (14, 15) in z-Richtung erzeugbar sind,
- **daß** die Werkzeughalter (14, 15) mit je einer Führung (14', 14"; 15', 15", 15" ') ausgebildet sind, die mit entsprechenden Aufnahmen der Werkzeuge (T1, T2) zusammenwirken, und daß die Führung (15', 15", 15"') im ersten Werkzeughalter (15) einen abgewinkelten Verlauf aufweist und zur Arbeitsspindel (3') hin in x-Richtung und zum Werkzeugmagazin (8) hin in y-Richtung offen ist und daß die Führung (14', 14") im zweiten Werkzeughalter (14) einen geradlinigen Verlauf aufweist und beidseitig in y-Richtung offen ist, und
- **daß** für die Übergabe von Werkzeugen (T1, T2) zwischen dem Werkzeugmagazin (8) und den Werkzeughaltern (14, 15) und umgekehrt ein in y-Richtung bewegbarer Schieber (10) vorgesehen ist.

2. Werkzeugmaschine nach Anspruch 1, **dadurch gekennzeichnet, daß** das Werkzeugmagazin (8) und die Werkzeugwechseleinrichtung in der x-Richtung mit dem Spindelstock (3) gekoppelt und zusammen mit diesem verfahrbar und in y- und z-Richtung von dem Spindelstock (3) entkoppelt und unverfahrbar sind, wobei das Werkzeugmagazin (8) in x-Richtung neben dem Spindelstock (3) angeordnet ist.

3. Werkzeugmaschine nach Anspruch 1 oder 2, **dadurch gekennzeichnet, daß** der Wechslerschlitten (11) einen flachen, in x-Richtung zum Spindelstock (3) weisenden Wechslerarm (12) aufweist, der die Werkzeughalter (14, 15) trägt und der in y-Richtung gesehen sich bei einem Werkzeugwechsel hinter der Arbeitsspindel (3') befindet.

4. Werkzeugmaschine nach einem der vorangehenden Ansprüche, **dadurch gekennzeichnet, daß** der erste Werkzeughalter (15) eine Arretierhebelanordnung (61, 66) umfaßt, mit der ein in deh Werkzeughalter (15) aufgenommenes Werkzeug (T1) in x-Richtung festlegbar ist, wobei die Arretierhebelanordnung (61, 66) durch das in x-Richtung erfolgende Anfahren des aus der Spindel (3') zu übernehmenden Werkzeuges (T1) aus ihrer Offen-Stellung in eine Arretierstellung überführbar ist und wobei bei oder nach der Übergabe des Werkzeuges (T1) an das Werkzeugmagazin (8) die Arretierhebelanordnung (61, 66) wieder in ihre Offen-Stellung bringbar ist.

5. Werkzeugmaschine nach Anspruch 4, **dadurch gekennzeichnet, daß** der Schieber (10) bei seiner Bewegung in y-Richtung während oder nach der Übergabe des Werkzeuges (T1) aus dem Werkzeughalter (15) in das Werkzeugmagazin (8) in Wirkeingriff mit einem am Werkzeughalter (15) vorgesehenen Betätigungselement tritt, durch welches bei seiner Betätigung durch den Schieber (10) eine Überführung der Arretierhebelanordnung (61, 66) aus der Arretierstellung in ihre Offen-Stellung bewirkbar ist.

6. Werkzeugmaschine nach einem der vorangehenden Ansprüche, **dadurch gekennzeichnet, daß** der Schieber (10) durch einen Kurbeltrieb (30) mittels eines Getriebebremsmotors (31) antreibbar ist.

7. Werkzeugmaschine nach einem der vorangehenden Ansprüche, **dadurch gekennzeichnet, daß** für das Verfahren des Wechslerschlittens (11) in der x-Richtung ein NC-Antrieb vorgesehen ist.

8. Werkzeugmaschine nach Anspruch 7, **dadurch gekennzeichnet, daß** der NC-Antrieb eine Kugelrollspindel (16) mit Servomotorantrieb (24) sowie eine Linearführung (20, 38) für den Wechslerschlitten (11) umfaßt.

9. Werkzeugmaschine nach Anspruch 7, **dadurch gekennzeichnet, daß** der NC-Antrieb durch einen gesteuerten Motor mit Kurvenantrieb sowie eine Linearführung (20, 38) für den Wechslerschlitten (11) gebildet ist.

10. Werkzeugmaschine nach Anspruch 7, **dadurch gekennzeichnet, daß** der NC-Antrieb eine positionsgesteuerte Kolben-Zylinder-Einheit sowie eine Linearführung (20, 38) für den Wechslerschlitten (11) umfaßt.

11. Werkzeugmaschine nach einem der vorangehenden Ansprüche, **dadurch gekennzeichnet, daß** der Wechslerarm (12) in der x-z-Ebene bewegbar mit dem übrigen Wechslerschlitten (11) verbunden ist und daß der Wechslerarm (12) relativ zum übrigen Wechslerschlitten (11) bei dessen Verfahren in x-Richtung zusätzlich so bewegbar ist, daß die Werkzeughalter (14, 15) beim Werkzeugwechsel bei unbewegter Arbeitsspindel (3') relativ zu dieser die für den Werkzeugwechsel erforderlichen Hubbewegungen in z-Richtung ausführen.

12. Werkzeugmaschine nach Anspruch 11, **dadurch gekennzeichnet, daß** der Wechslerarm (12) um eine in y-Richtung weisende Achse (41) verschwenkbar am übrigen Wechslerschlitten (11) gehaltert ist und daß er über mindestens je eine Steuerkurve (45) und Kurvenrolle (43) relativ zum übrigen Wechslerschlitten (11) bei dessen Verfahren in x-Richtung in der x-z-Ebene zwangsgesteuert bewegt wird.

13. Werkzeugmaschine nach Anspruch 11 oder 12, **dadurch gekennzeichnet, daß** die Steuerkurve (45) ein vorbelastetes Sperrstück (47) enthält, das ein Durchlaufen der Steuerkurve (45) durch die Kurvenrolle (43) nur in einer Richtung gestattet.

14. Werkzeugmaschine nach einem der vorangehenden Ansprüche, **dadurch gekennzeichnet, daß** das Werkzeugmagazin (8) eine aus mehreren Werkzeugwagen (81, 82, 83) gebildete Magazinkette umfaßt, die in der x-y-Ebene NC-gesteuert verfahrbar ist und die bevorzugt einen oval- oder kreisförmigen Verlauf hat.

15. Werkzeugmaschine nach Anspruch 14, **dadurch gekennzeichnet, daß** das Werkzeugmagazin (8) in einem mit Ausnahme des Bewegungsweges des Schiebers (10) geschlossenen Gehäuse (7) untergebracht ist, das an seiner Vorderfläche und/oder an seiner dem Spindelstock (3) abgewandten Seitenfläche eine freigebbare Zugangsöffnung (17) für eine manuelle Be- und Entstückung des Werkzeugmagazins (8) aufweist.

## Claims

1. Machine tool, in particular a CNC-controlled machining centre, with a machine frame with at least one work table (4, 5), with a spindle carrier (3) bearing a rotary drive work spindle (3') and mounted on the machine frame, where the spindle carrier (3) can travel relative to the work table (4, 5) in three spatial coordinates (x-, y-, z-axis), with a tool magazine (8) for holding in readiness a number of tools (T1, T2, T3), and with a tool changing device with which tools (T1, T2, T3) can be transported automatically out of the tool magazine to the work spindle (3') and vice versa, whereby the spindle carrier (3) can travel for the purpose of tool change into a tool change neutral position, which is on the x-axis next to the tool changing device, and is on the y-axis outside the working area for the purpose of workpiece machining,
**characterised in**
- **that** the tool changing device has a changeover slide (11) that has two tool holders (14, 15) and that can travel under control on the x-axis
- **that** the tool changing device and the tool magazine (8) are outside the working area of the work spindle (3') for the purpose of workpiece machining,
- **that**, from this neutral position, by travelling the changeover slide (11) on the x-axis, the first tool (T1) to be removed from the work spindle (3') can be transferred into the first, at this time, unoccupied tool holder (15), and a second tool (T2) to be transported out of the tool magazine and placed in the work spindle (3') is transferable from the second tool holder (14) to the work spindle (3'), whereby lifting motions required for the tool change can be generated, where necessary, on the z-axis between the work spindle (3') and tool (T1, T2) either by travelling the spindle carrier (3) on the z-axis or by moving the tool holders (14, 15) on the z-axis,
- **that** the tool holders (14, 15) are each fitted with a tool guide (14', 14' '; 15', 15'', 15'''), which work in conjunction with the corresponding seats of the tools (T1, T2), and that the tool guide (15', 15'', 15''') in the first tool holder (15) is angled at 90° and is open with respect to the work spindle (3') on the x-axis and open with respect to the tool magazine (8) on the y-axis and that the tool guide (14', 14'') in the second tool holder (14) is straight and is open on both sides on the y-axis, and
- **that** for the transfer of tools (T1, T2) between the tool magazine (8) and the tool holders (14, 15), and vice versa, a movable slider (10) is provided on the y-axis.

2. Machine tool according to claim 1, **characterised in that** the tool magazine (8) and the tool changing device are coupled on the x-axis with the spindle carrier (3) and can travel together with the latter and are uncoupled from the spindle carrier (3) on the y-axis and z-axis and cannot travel, whereby the tool magazine (8) is situated on the x-axis next to the spindle carrier (3).

3. Machine tool according to claim 1 or 2, **characterised in that** the changeover slide (11) has a flat changeover arm (12) pointing along the x-axis towards the spindle carrier (3), where the changeover arm (12) bears the tool holders (14, 15) and, seen along the y-axis, is located during tool changing behind the work spindle (3').

4. Machine tool according to one of the previous claims, **characterised in that** the first tool holder (15) includes a set of stop levers (61, 66), with which a tool (T1) seated in the tool holder (15) can be fixed on the x-axis, whereby the stop levers (61, 66) can be shifted out of their open position into a locked position by moving the tool (T1) to be accepted from the work spindle (3') on the x-axis and whereby during or after transfer of the tool (T1) to the tool magazine (8), the stop levers (61, 66) can be returned once more to their open position.

5. Machine tool according to claim 4, **characterised in that** the slider (10) during its motion on the y-axis during or after transfer of the tool (T1) from the tool holder (15) into the tool magazine (8) engages with an actuating element fitted on the tool holder (15), by which, upon its actuation by the slider (10), the stop levers (61, 66) can be shifted out of the locked position in their open position.

6. Machine tool according to one of the previous claims, **characterised in that** the slider (10) can be driven by a crank mechanism (30) by means of a transmission brake motor (31).

7. Machine tool according to one of the previous claims, **characterised in that**, for the purpose of travelling the changeover slide (11), a numerical control drive is provided on the x-axis.

8. Machine tool according to claim 7, **characterised in that** the numerical control drive includes a ball roll spindle (16) with a servomotor drive (24) as well as a linear guide (20, 38) for the changeover slide (11).

9. Machine tool according to claim 7, **characterised in that** the numerical control drive is formed with a controlled motor with a cam drive as well as a linear guide (20, 38) for the changeover slide (11).

10. Machine tool according to claim 7, **characterised in that** the numerical control drive includes a position-controlled piston cylinder unit as well as linear guide (20, 38) for the changeover slide (11).

11. Machine tool according to one of the previous claims, **characterised in that** the changeover arm (12) is connected on the x-z plane and can move with the rest of the changeover slide (11), and that the changeover arm (12) relative to the rest of the changeover slide (11), when the latter is travelling on the x-axis, can additionally move such that the tool holders (14, 15) during tool changing, and with the work spindle (3') stationary relative to the latter, perform the lifting movements on the z-axis necessary for the tool change.

12. Machine tool according to claim 11, **characterised in that** the changeover arm (12) is retained on the rest of the changeover slide (11) such that it can tilt in the direction of the y-axis (41), and that the changeover arm (12) is obliged to move over at least one radial cam (45) and one cam roller (43), each relative to the rest of the changeover slide (11) when the latter is travelling on the x-axis on the x-z plane.

13. Machine tool according to claim 11 or 12, **characterised in that** the radial cam (45) contains a pre-stressed locking piece (47) that allows the radial cam (45) to run through the cam roller (43) in one direction only.

14. Machine tool according to one of the previous claims, **characterised in that** the tool magazine (8) includes a series of magazines formed of several tool carriages (81, 82, 83), where the magazine series can travel under numerical control on the x-y plane and which preferably has an oval or circular profile.

15. Machine tool according to claim 14, **characterised in that** the tool magazine (8) is housed in a housing (7), which is closed with the exception of the travel path of the slider (10), where the housing on its front surface and/or on its flank turned away from the spindle carrier (3) has an access opening (17), which can be uncovered for manual charging and discharging of the tool magazine (8).

## Revendications

1. Machine outil, en particulier centre d'usinage à commande numérique qui comprend un cadre de machine comportant au moins une table porte-pièce (4, 5), une poupée (3) qui est guidée sur le cadre de machine, porte un arbre moteur (3') susceptible d'être entraîné à rotation et est mobile dans trois coordonnées spatiales (directions x, y, z) par rapport à la table porte-pièce (4, 5), un magasin (8) d'outils pour la préparation de plusieurs outils (T1, T2, T3), et un dispositif de changement d'outils au moyen duquel des outils (T1, T2, T3) peuvent être transportés automatiquement du magasin d'outils vers l'arbre moteur (3') et inversement, dans laquelle la poupée (3) peut être déplacée pour un changement d'outils vers une position de base de changement d'outils qui est située en direction x près du dispositif de changement d'outils et en direction y en dehors de la zone de travail pour un usinage de pièce,
**caractérisée en ce que**
- le dispositif de changement d'outils comporte un coulisseau (11) de changeur à deux supports (14, 15) d'outils, mobile de façon commandée en direction x,
- le dispositif de changement d'outils et le magasin (8) d'outils sont en dehors de la zone de travail de l'arbre moteur (3') pour un usinage de pièce,
- un premier outil (T1) à enlever de l'arbre moteur (3') peut d'abord être transféré dans le premier support (15) d'outil par déplacement du coulisseau (11) de changeur à partir de cette position de base, et un deuxième outil (T2) transporté hors du magasin d'outils, à monter sur l'arbre moteur (3'), peut être transféré du deuxième support (14) d'outil sur l'arbre moteur (3'), des déplacements verticaux en direction z éventuellement nécessaires pour le changement d'outils entre l'arbre moteur (3') et l'outil (T1, T2) pouvant être engendrés soit par déplacement de la poupée (3) en direction z, soit par déplacement des supports (14, 15) d'outils en direction z,
- les supports (14, 15) d'outils comportent chacun un guidage (14', 14"; 15', 15", 15'''), que ceux-ci coopèrent avec des logements correspondants des outils (T1, T2) et que le guidage (15', 15", 15''') dans le premier support (15) d'outils est d'un tracé coudé et est ouvert vers l'arbre moteur (3') en direction x et vers le magasin (8) d'outils en direction y et **en ce que** le guidage (14', 14") dans le deuxième support (14) d'outil est de tracé rectiligne et est ouvert des deux côtés en direction y, et
- **en ce qu'**un curseur (10) mobile en direction y est prévu pour transférer des outils (T1, T2) à partir du magasin (8) d'outils vers les supports (14, 15) d'outils et inversement.

2. Machine outil selon la revendication 1, **caractérisée en ce que** le magasin (8) d'outils et le dispositif de changement d'outils sont couplés avec la poupée (3) et mobiles avec celle-ci dans la direction x et sont désaccouplés de la broche (3) en direction y et z et ne peuvent être déplacés dans ces directions avec elle, le magasin (8) d'outils étant agencé près de la poupée (3) en direction x.

3. Machine outil selon la revendication 1 ou 2, **caractérisée en ce que** le coulisseau (11) de changeur comporte un bras plat de changement (12) qui est tourné en direction x vers la poupée (3), porte les supports (14, 15) d'outils et se trouve, lors d'un changement d'outils, derrière l'arbre moteur (3') en vue en direction y.

4. Machine outil selon l'une quelconque des revendications précédentes, **caractérisée en ce que** le premier support (15) d'outils comprend un agencement (61, 66) de levier de blocage au moyen duquel un outil (T1) logé dans le support (15) d'outil peut être fixé en direction x, **en ce que** l'agencement (61, 66) de levier de blocage peut être déplacé de sa position ouverte vers une position de blocage par le déplacement en direction x de l'outil (T1) à enlever de l'arbre moteur (3') et **en ce que** l'agencement (61, 66) de levier de blocage peut être ramené vers sa position ouverte après transfert de l'outil (T1) dans le magasin (8) d'outils.

5. Machine outil selon la revendication 4, **caractérisée en ce que** le curseur (10) entre lors de son déplacement en direction y, pendant ou après le transfert de l'outil (T1) dans le magasin (8) d'outils à partir du support (15) d'outil, en contact fonctionnel avec un élément de manoeuvre prévu sur le support (15) d'outil qui provoque, lors de son actionnement par le curseur (10), un passage du dispositif (61, 66) de levier de blocage hors de sa position de blocage vers sa position ouverte.

6. Machine outil selon l'une quelconque des revendications précédentes, **caractérisée en ce que** le curseur (10) peut être entraîné par un mécanisme (30) à bielle au moyen d'un moto-freineur (31) à transmission.

7. Machine outil selon l'une quelconque des revendications précédentes, **caractérisée en ce qu'**un entraînement à commande numérique est prévu pour le déplacement du coulisseau (11) de changeur en direction x.

8. Machine outil selon la revendication 7, **caractérisée en ce que** l'entraînement à commande numérique comprend une broche (16) à roulement à billes à entraînement (24) par servomoteur ainsi qu'un guidage linéaire (20, 38) pour le coulisseau (11) de changeur.

9. Machine outil selon la revendication 7, **caractérisée en ce que** l'entraînement à commande numérique consiste en un moteur piloté à entraînement à cames et en un guidage linéaire (20, 38) pour le coulisseau (11) de changeur.

10. Machine outil selon la revendication 7, **caractérisée en ce que** l'entraînement à commande numérique comprend une unité à piston et cylindre commandée en position ainsi qu'un guidage linéaire (20, 38) pour le coulisseau (11) de changeur.

11. Machine outil selon l'une quelconque des revendications précédentes, **caractérisée en ce que** le bras de changement (12) est connecté au reste du coulisseau (11) de changeur de façon mobile dans le plan x-z et **en ce que** le bras de changement (12) est en outre mobile lors de son déplacement x par rapport au reste du coulisseau (11) de changeur d'une manière telle que les supports (14, 15) d'outils exécutent, lorsque l'arbre moteur (3') est immobile lors du changement d'outils, les mouvements verticaux en direction z par rapport à celui-ci qui sont nécessaires pour le changement d'outils.

12. Machine outil selon la revendication 11, **caractérisée en ce que** le bras de changement (12) est supporté à pivotement par rapport au reste du coulisseau (11) de changeur, autour d'un axe (41) tourné en direction y, et **en ce qu'**il est déplacé au moyen d'au moins respectivement une came (45) de commande et un rouleau (43) de came, en étant piloté à force par rapport au reste du coulisseau (11) de changeur lors du déplacement de celui-ci en direction x dans le plan x-z.

13. Machine outil selon la revendication 11 ou 12, **caractérisée en ce que** la came de commande (45) contient un élément de blocage préalablement sollicité (47) qui ne permet un parcours de la came de commande (45) que dans une direction sous l'effet du rouleau (43) de came.

14. Machine outil selon l'une quelconque des revendications précédentes, **caractérisée en ce que** le magasin (8) d'outils comprend une chaîne de magasins constituée de plusieurs chariots (81, 82, 83) d'outils qui peut être déplacée dans le plan x-y par commande numérique et dont le tracé est de préférence ovale ou circulaire.

15. Machine outil selon la revendication 14, **caractérisée en ce que** le magasin (8) d'outils est monté dans un carter (7) qui est fermé à l'exception du trajet de déplacement du curseur (10), et qui comporte sur sa surface avant et/ou sur sa surface latérale opposée à la poupée (3) une ouverture d'accès libérable pour garnir ou dégarnir manuellement le magasin (8) d'outils.
